# EUROPEAN PATENT SPECIFICATION

(11) **EP 3 562 193 B1**
(45) Date of publication and mention of the grant of the patent: **09.07.2025**
(21) Application number: 17884894.1
(22) Date of filing: 25.10.2017
(51) Int. Cl.: H04L 41/0816, H04L 41/0823, H04L 43/0811

(54) **RADIO LINK MANAGEMENT METHOD, APPARATUS AND SYSTEM, AND STORAGE MEDIUM**
FUNKVERBINDUNGSVERWALTUNGSVERFAHREN, VORRICHTUNG UND SYSTEM SOWIE SPEICHERMEDIUM
PROCÉDÉ, APPAREIL, ET SYSTÈME DE GESTION DE LIAISON RADIO, ET SUPPORT DE STOCKAGE

(30) Priority: 20.12.2016 CN 201611187516
(43) Date of publication of application: 30.10.2019
(73) Proprietor: ZTE Corporation, Shenzhen, Guangdong 518057 (CN)
(72) Inventor: YANG, Li, Shenzhen Guangdong 518057 (CN)
(74) Representative: Regimbeau
(86) International application number: PCT/CN2017/107714
(87) International publication number: WO 2018/113410

(56) References cited:
- EP-A1- 3 177 071
- WO-A1-2015/028563
- WO-A1-2015/184889
- WO-A1-2016/047904
- WO-A1-2016/165127
- WO-A1-2016/165661
- WO-A1-2016/197557
- WO-A1-2016/197779
- CN-A- 104 640 165
- CN-A- 105 992 284
- CN-A- 106 162 895
- US-A1- 2016 135 103
- US-A1- 2016 227 459

## Description

### TECHNICAL FIELD

The present invention relates to the field of mobile communications and, in particular, to a radio link management method, apparatus and system, and a storage medium.

### BACKGROUND

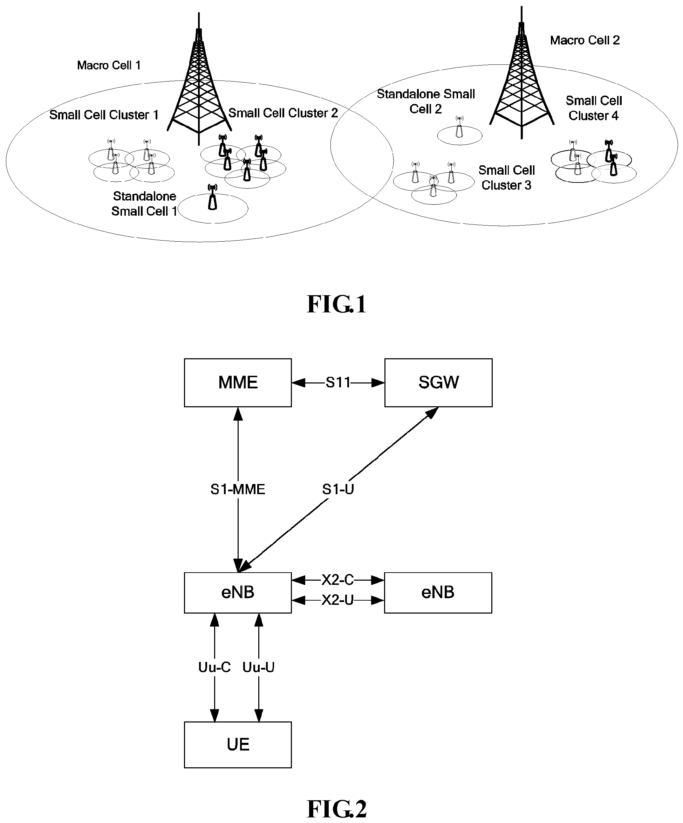

For any kind of cellular mobile system, regardless of the specific radio access technology (RAT) behind the cellular mobile system, the cellular mobile system is generally composed of a basic network node (such as a core network (CN), a gateway, a control unit (CU), a base station (BS), and a distributed unit (DU)) of the cellular network, a user equipment (UE), and a most basic coverage unit (a serving cell or a serving beam) for providing the mobile communication radio link service. FIG. 1 is a schematic diagram of a cellular network including macro and micro base stations (corresponding to macro and micro cells) in the cellular mobile system. The cell downlink coverage reflects an effective transmission range when the base station (e.g., an evolved Node B (eNB), a Next Generation Node B (gNB), and a transmission and reception point (TRP)) can implement a controllable downlink transmission effect. The cell downlink load reflects a degree to which the current downlink air interface radio resource of the base station is used and occupied. The cell uplink coverage reflects an effective transmission range when the UE can implement a controllable uplink transmission effect, which may be different from the downlink coverage. The cell uplink load reflects a degree to which the current uplink air interface radio resource of the base station is used and occupied, which may be different from the downlink load. With an increased number of cellular mobile users and huge access transmission requirements of various data services, the operators often implement hotspot area coverage through networking of low power nodes (LPNs) or small cells. The LPN is also referred to as the micro cell or the small cell. The coverage of the LPN is much smaller than that of the macro cell and the LPN is generally covered or overlapped in an umbrella form by the macro cell deployed at a different frequency.

The Long Term Evolution (LTE) cellular mobile system in the fourth generation (4G) is taken as an example below. The LTE cellular mobile system includes the Evolved Universal Terrestrial Radio Access Network (E-UTRAN) and the CN (such as a mobility management entity (MME) and a serving gateway (SGW)). The E-UTRAN includes a large number of eNBs. The eNB is connected to the CN through an S1 interface and the eNBs are connected to each other through an X2 interface. A single eNB can manage one or more serving cells, and provide uplink and downlink data transmission services for the UE through the air interface Uu. The system architecture and interfaces of the LTE are shown in FIG. 2. The MME and the eNB provide various communication services, allocate related radio resources, and configure a data radio bearer (DRB) for the UE. A master eNB establishes a unique radio resource control (RRC) signaling radio bearer (SRB) for the UE to preform wireless management and configuration for the UE. To maintain continuity of the Quality of service (QoS) associated with each DRB in the UE movement process and to achieve equalization/rationalization of uplink and downlink radio resources between eNBs, the eNBs implement mobility or radio resource aggregation and control between homogeneous/heterogeneous macro and micro serving cells of the UE through a specific mobile handover procedure.

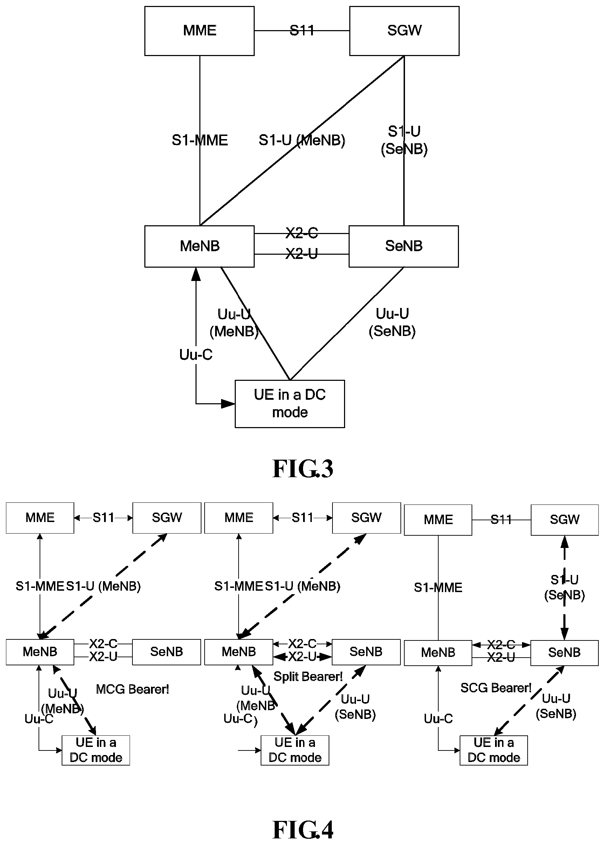

Currently, the LTE technology has been able to support the UE to simultaneously establish a radio link with the macro cell and the micro cell, and simultaneously preform uplink and downlink data transmission, which is referred to as an LTE dual connectivity (DC) technology. An operating principle of the LTE DC technology is, as shown in FIG. 3, that the UE in an LTE DC data transmission mode can simultaneously perform uplink and downlink duplex communications with both a master eNodeB (MeNB) and a secondary eNodeB (SeNB). The MeNB controls and manages the radio link (RL) of the UE, which has established the RRC and is responsible for the mobility and configuration management of the UE. The MeNB has the function of simultaneously connecting the upstream CN and the downstream UE. Logically, the SeNB must be connected to the MeNB through the X2 interface to provide the UE with functions related to user traffic data packet split transmission. The functions are performed to aggregate radio resources on the SeNB side, enhance the user data transmission rate, and improve the system capacity and uplink and downlink traffic load distribution. It can be simply understood that the Non Access Stratum (NAS) control signaling interactions between the UE and the MME of the CN in the LTE can only be implemented by the MeNB, and the Access Stratum (AS) control signaling interactions between the UE and the access network of the LTE can only be implemented by the MeNB, too; the user traffic data packet transmission interactions between the UE and the CN and the access network of the LTE can be implemented by a Master Cell Group (MCG) RL on the MeNB side, and can also be implemented by a Secondary Cell Group (SCG) RL on the SeNB side. However, the AS RRC control signaling interactions between the SeNB and the MME of the CN or the UE must be implemented by the MeNB as a transfer point instead of being directly implemented by the SCG RL. The LTE DC technology supports three basic DRB types, as shown in FIG. 4. The left in FIG. 4 shows a main radio bearer, MCG bearer, (equivalent to the radio bearer in a single connectivity data transmission mode) in the LTE DC technology which implements the uplink and downlink transmission of the user traffic data packet by aggregating master cell groups (MCGs) on the MeNB side. The middle in FIG. 4 shows a split bearer in the LTE DC technology which implements the uplink and downlink transmission of the user traffic data packet by aggregating the MCGs on the MeNB side and SCGs on the SeNB side. The right in FIG. 4 shows a secondary radio bearer, SCG bearer, in the LTE DC technology which implements the uplink and downlink transmission of the user traffic data packet by aggregating the SCGs on the SeNB side.

After the 4G LTE cellular network has been operated for years, with the explosive growth and expansion of different types of user traffic data packet transmission requirements in various industries, researches and designs are being made on and standards are being formulated for the 5G New RAN system (including an evolved LTE (eLTE) system and a revolutionary New Radio (NR) system). Compared with the traditional 3G Universal Mobile Telecommunications System (UMTS) and 4G LTE mobile cellular communication systems, the application scenarios of the 5G cellular system are very different. A future 5G mobile network needs to provide not only services for communications between people, but also a wide range of services for a wide variety of Internet of Things devices. By use of the 5G mobile network, virtual reality, high-definition videos and other services with ultra-high data transmission rate requirements, or car networking unmanned driving, telemedicine surgery and other services with low-latency and ultra-reliable transmission service requirements, as well as the density of UEs in the small Internet of Things are greatly improved in terms of transmission rates, single-user uplink and downlink rates, end-to-end delays, and the number of accessible UEs per square meter compared with those in the existing mobile network.

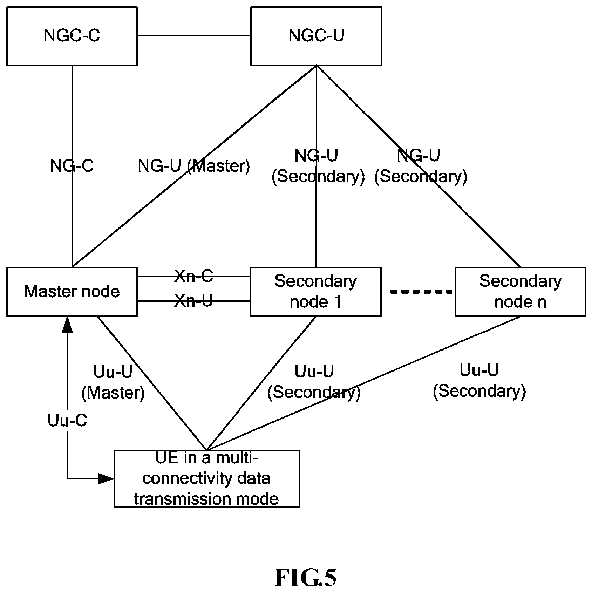

In the future, to better utilize two relatively independent cellular mobile networks, the 4G LTE and the 5G New RAN (the 5G-related radio nodes will be simply illustrated by the NR gNBs), through cooperation, the operators will aggregate radio resources of two or more homogeneous/heterogeneous base station nodes in a manner similar to the LTE DC tightly coupled mode in the scenario where the 4G/5G/wireless local area network (WLAN) heterogeneous system networks are deployed (that is, different LTE eNBs, eLTE eNBs, NR gNBs and WLAN access points (APs) are deployed at different frequencies or in different areas). In this way, the UE can simultaneously establish and maintain radio links with two or more homogeneous/heterogeneous base station nodes (hereinafter simply referred to as a multi-connectivity data transmission mode) which together implement the uplink and downlink transmission of the user traffic data packet. Similar to the operating principle of the LTE DC technology in FIG. 3, the principle of the multi-connectivity data transmission mode is as shown in FIG. 5. Compared with FIG. 3, the CN is replaced with a Next Generation Core (NGC) in the 5G in FIG. 5, which is still divided into a control plane entity NGC-C (similar to the MME) and a user plane entity NGC-U (similar to the SGW). The interface between a network element of the CN and the radio access network element gNB/eNB is replaced with NG, and the number of base station nodes tightly coupled in the multi-connectivity data transmission mode increases from 2 to above 2 (more than two). However, one master node (which can be implemented by the eNB or the gNB) and multiple secondary nodes (which can be implemented by the eNB or the gNB or the WLAN AP) still exist. The interface between the base station nodes is replaced with Xn (similar to X2), and the air interface Uu is still divided into Uu-C (corresponding to the SRB) for transmitting RRC control signaling and Uu-U (corresponding to the DRB) for transmitting the user traffic data packet.

In the past and at present, the core of the operating principles of both the LTE DC technology in the 4G and the NR heterogeneous multi-connectivity data transmission technology in the 5G is that only one master base station aggregates, controls, and manages one or more secondary base stations. Therefore, the RL configuration and resource allocation conditions of all the secondary nodes need to be controlled, managed, and confirmed by the master base station. For example, it is necessary to check and confirm whether the RL configuration and resource conditions of a certain secondary base station conflict with the policy of the master base station and whether a conflict in the total configuration of the aggregated master and secondary base stations exceeds the total hardware and software capability of the UE. The secondary base station can only passively respond to mobility management (handover) and has no independent control and selection rights.

In addition to the above, the current multi-connectivity data transmission mode has the following multiple operating constraints and limitations:
1: When the MCG RL on the master base station side moves or changes (switches), all the SCG RLs on the secondary base station side are passively affected. Not only the uplink and downlink data transmission on the MCG bearers are interrupted (the data transmission can be resumed after the MCG RL is successfully switched), but also the uplink and downlink data transmission on all the SCG bearers are passively interrupted though all the SCG RLs do not move or change (switch) (the data transmission can be resumed after the MCG RL is successfully switched and the SCG bearers are reconfigured). In the handover process, the uplink and downlink data transmission on the UE side and the network side are completely interrupted and it takes a period to reestablish the RL and resume the data transmission, which greatly lowers user communication experience.
2: When the MCG RL on the master base station side fails to be switched, resources and configurations related to all the SCG RLs on the secondary base station side are automatically forced to be released, and then the master base station attempts to reestablish the RRC connection and recover the multi-connectivity transmission mode. The above process not only consumes some air interface and terrestrial interface signaling resources, but also causes a larger data transmission interruption delay, lowering the user communication experience to a greater extent.
3: When the MCG RL on the master base station side has an MCG local link failure (RLF), all the SCG RLs on the secondary base station side are passively affected. Not only the uplink and downlink data transmission on the MCG bearers are interrupted (the data transmission can be resumed after the MCG RL is successfully recovered), but also the uplink and downlink data transmission on all the SCG bearers are passively interrupted though all the SCG RLs do not have an SCG RLF (the data transmission can be resumed after the MCG RL is successfully recovered and the SCG bearers are reconfigured). At this time, the data transmission of the UE and the network are completely interrupted and it takes a period to reestablish the RL and resume the data transmission, which greatly lowers the user communication experience.

According to the above existing mechanism and principle, all the SCG RLs on the secondary base station side are constrained and affected by the state of the MCG RL on the master base station side, which has many disadvantages and limitations.

Document (US2016135103A1) discloses a method and apparatus for performing a handover procedure in a wireless communication system is provided. A master eNodeB (MeNB), in dual connectivity, performs a handover decision from a source secondary eNB (SeNB) to a target SeNB, and transmits an offloading request message, which includes contexts of E-UTRAN radio access bearers (E-RABs) to be offloaded and an offloading indication, to the target SeNB. The MeNB receives an offloading request acknowledge message, which includes identifiers (IDs) of E-RABs accepted by the target SeNB, as a response to the offloading request message from the target SeNB, and transmits an offloading mobility indication to a user equipment (UE).

### SUMMARY

To solve the preceding technical problem, embodiments of the present invention provides a radio link management method, apparatus, and system, and a storage medium, according to the independent claims, to enable a control node (a master node) on a network side to enhance radio link management for a UE in a heterogeneous network multi-connectivity data transmission mode. Further improvements are provided in the dependent claims.

The invention is set out in the appended set of claims.

In the technical solutions in the embodiments of the present invention, the master base station selects the target secondary base station from the set of secondary base stations, performs the configuration on the target secondary base station, and takes the configured target secondary base station as the primary secondary base station. The master base station supports the first type of control operation performed on the primary secondary base station and the common secondary base station, and the primary secondary base station supports the second type of control operation performed on the common secondary base station, where the first type of control operation includes the second type of control operation. The primary secondary base station in the set of secondary base stations is the special secondary base station, and the rest of the set of secondary base stations except the primary secondary base station is the common secondary base station. When the technical solutions in the embodiments of the present invention are used, the primary secondary base station is added to undertake in part an original control and management burden related to the multi-connectivity configuration and operation of the UE within the single master base station and equalize in space the consumption of control and management resources and air interface signaling resources within the master base station.

### BRIEF DESCRIPTION OF DRAWINGS

The drawings generally illustrate various embodiments discussed in the present invention by way of examples rather than limitations.
FIG. 1 is a schematic diagram of a heterogeneous cellular mobile network;
FIG. 2 is a schematic diagram of a single connectivity data transmission mode in the LTE;
FIG. 3 is a schematic diagram of a dual connectivity data transmission mode in the LTE;
FIG. 4 is a schematic diagram of three DRB types in a dual connectivity data transmission mode in the LTE;
FIG. 5 is a schematic diagram of a traditional multi-connectivity data transmission mode under a single master node;
FIG. 6 is a schematic diagram of an enhanced multi-connectivity data transmission mode under a master node plus a primary secondary node;
FIG. 7a is a schematic diagram 1 of a transmission mode according to an embodiment 1 of the present invention;
FIG. 7b is a schematic diagram 2 of a transmission mode according to the embodiment 1 of the present invention;
FIG. 7c is a schematic diagram 3 of a transmission mode according to the embodiment 1 of the present invention;
FIG. 8a is a schematic diagram 1 of a transmission mode according to an embodiment 2 of the present invention;
FIG. 8b is a schematic diagram 2 of a transmission mode according to the embodiment 2 of the present invention;
FIG. 8c is a schematic diagram 3 of a transmission mode according to the embodiment 2 of the present invention;
FIG. 9a is a schematic diagram 1 of a transmission mode according to an embodiment 3 of the present invention;
FIG. 9b is a schematic diagram 2 of a transmission mode according to the embodiment 3 of the present invention;
FIG. 9c is a schematic diagram 3 of a transmission mode according to the embodiment 3 of the present invention;
FIG. 9d is a schematic diagram 4 of a transmission mode according to the embodiment 3 of the present invention;
FIG. 10 is a flowchart 1 of a radio link management method according to an embodiment of the present invention;
FIG. 11 is a flowchart 2 of a radio link management method according to an embodiment of the present invention;
FIG. 12 is a structural diagram 1 of a radio link management apparatus according to an embodiment of the present invention;
FIG. 13 is a structural diagram 2 of a radio link management apparatus according to an embodiment of the present invention; and
FIG. 14 is a structural diagram of a radio link management system according to an embodiment of the present invention.

### DETAILED DESCRIPTION

To provide a more detailed understanding of features and content of embodiments of the present invention, implementation of the embodiments of the present invention is described below in detail with reference to the drawings. The drawings are provided for reference only and are not intended to limit the embodiments of the present invention.

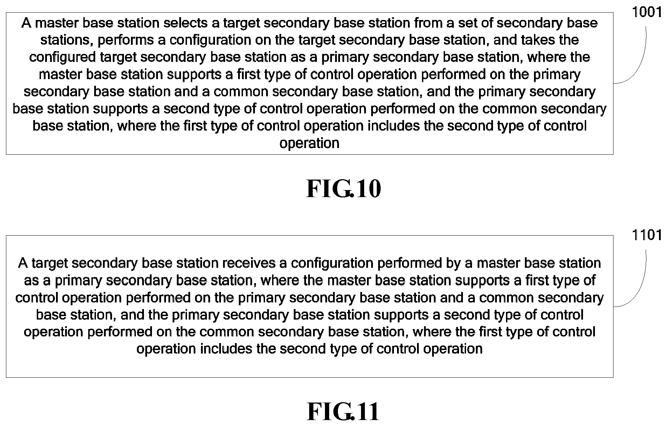

FIG. 10 is a flowchart 1 of a radio link management method according to an embodiment of the present invention. As shown in FIG. 10, the radio link management method includes step 1001.

In step 1001, a master base station selects a target secondary base station from a set of secondary base stations, performs a configuration on the target secondary base station, and takes the configured target secondary base station as a primary secondary base station. The master base station supports a first type of control operation performed on the primary secondary base station and a common secondary base station, and the primary secondary base station supports a second type of control operation performed on the common secondary base station, where the first type of control operation includes the second type of control operation.

In the embodiments of the present invention, the primary secondary base station in the set of secondary base stations is a special secondary base station, and the rest of the set of secondary base stations except the primary secondary base station is the common secondary base station. Here, a first type of configuration is related to a role of the primary secondary base station as the common secondary base station in splitting data transmission; and a second type of configuration is related to a role of the primary secondary base station as the special secondary base station in assisting in the data transmission. The primary secondary base station is added to undertake in part an original control and management burden related to a multi-connectivity configuration and operation of a UE within a single master base station and equalize in space consumption of control and management resources and air interface signaling resources within the master base station.

In the embodiments of the present invention, the step in which the master base station selects the target secondary base station from the set of secondary base stations includes a step described below.

The master base station selects the target secondary base station from the set of secondary base stations based on a radio resource management (RRM) measurement result and/or a radio bearer load condition of a cell supported by each of the set of secondary base stations.

In the embodiments of the present invention, the step of performing the configuration on the target secondary base station includes a step described below.

The configuration is performed on the target secondary base station via Xn interface signaling. The configuration includes the first type of configuration and the second type of configuration. The first type of configuration is used for implementing the first type of control operation supported by the master base station and performed on the primary secondary base station; and the second type of configuration is used for implementing the second type of control operation supported by the primary secondary base station and performed on the common secondary base station.

It can be seen that the first type of configuration is related to the role of the primary secondary base station as the common secondary base station in splitting data transmission; and the second type of configuration is related to the role of the primary secondary base station as the special secondary base station in assisting in the data transmission.

In the embodiments of the present invention, the method further includes a step described below.

The master base station performs a configuration on the common secondary base station via the Xn interface signaling. The configuration includes only the first type of configuration. It can be seen that the first type of configuration is related to a data transmission splitting operation of the common secondary base station.

In the embodiments of the present invention, the method further includes a step described below.

The master base station performs a configuration related to the primary secondary base station on a UE via radio resource control (RRC) signaling through a Uu interface. The configuration related to the primary secondary base station includes a third type of configuration and a fourth type of configuration. The third type of configuration is used for implementing control plane link logic between the UE and the primary secondary base station; and the fourth type of configuration is used for implementing user plane link logic between the UE and the primary secondary base station.

In the embodiments of the present invention, a control plane link and a user plane link exist between the primary secondary base station and a network element in a CN.

When a control plane link between the master base station and the network element in the CN is in a normal operation state, the control plane link between the primary secondary base station and the network element in the CN in a configured and unactivated state, and the user plane link between the primary secondary base station and the network element in the CN is in an activated state and operates normally.

When the control plane link between the master base station and the network element in the CN is in an abnormal operation state, the control plane link and the user plane link between the primary secondary base station and the network element in the CN are in the activated state and operate normally.

In the embodiments of the present invention, a control plane link and a user plane link exist between the primary secondary base station and the UE.

The control plane link between the primary secondary base station and the UE and a control plane link between the master base station and the UE are simultaneously in the activated state and operate normally to simultaneously and jointly transmit their respective RRC signaling of the primary secondary base station and the master base station.

The user plane link between the primary secondary base station and the UE and a user plane link between the common secondary base station and the UE are simultaneously in the activated state and operate normally to simultaneously and jointly transmit their respective user plane data of the primary secondary base station and the common secondary base station.

In the embodiments of the present invention, the primary secondary base station supporting the second type of control operation performed on the common secondary base station includes the following step: the primary secondary base station performs at least one of the following control operations on the common secondary base station:
a radio link addition operation, a radio link deletion operation, a radio link reconfiguration operation, an operation for updating a serving cell group of the UE, and a data radio bearer (DRB) reconfiguration operation.

In the embodiments of the present invention, the method further includes a step described below.

After the primary secondary base station successfully performs the second type of control operation on the common secondary base station, the master base station and the primary secondary base station synchronize a control operation result via the Xn interface signaling to synchronize a state of configuring operation resources for the common secondary base station. In the embodiments of the present invention, the method further includes a step described below.

In case of a radio link connection failure or a mobile handover failure between the master base station and the UE, the master base station is allowed to activate the primary secondary base station. When the primary secondary base station is in the activated state, the primary secondary base station performs the following additional tasks: performing a task carried on a control plane link between a new master base station and the network element in the CN, and performing a task carried on a control plane link between the new master base station and the UE.

In the embodiments of the present invention, the method further includes a step described below.

An original master base station is released from a multi-connectivity configuration of the UE. Alternatively, the original master base station is configured as the common secondary base station.

Alternatively, the original master base station is configured as a new primary secondary base station.

In the embodiments of the present invention, the step in which the original master base station is released from the multi-connectivity configuration of the UE includes: releasing a control plane link and a user plane link between the original master base station and the network element in the CN and relevant link resources; and releasing a control plane link and a user plane link between the original master base station and the UE and relevant link resources.

In the embodiments of the present invention, the step in which the original master base station is configured as the common secondary base station includes: releasing the control plane link between the original master base station and the network element in the CN and the control plane link between the original master base station and the UE; configuring the user plane link between the original master base station and the network element in the CN as a user plane link between the common secondary base station and the network element in the CN; and configuring the user plane link between the original master base station and the UE as the user plane link between the common secondary base station and the UE.

In the embodiments of the present invention, the step in which the original master base station is configured as the new primary secondary base station includes: configuring the control plane link between the original master base station and the network element in the CN as a control plane link between the new primary secondary base station and the network element in the CN; configuring the control plane link between the original master base station and the UE as a control plane link between the new primary secondary base station and the UE; configuring the user plane link between the original master base station and the network element in the CN as a user plane link between the new primary secondary base station and the network element in the CN; and configuring the user plane link between the original master base station and the UE as a user plane link between the new primary secondary base station and the UE.

When the technical solution in the embodiments of the present invention is used, the primary secondary base station is added to undertake in part the original control and management burden related to the multi-connectivity configuration and operation of the UE within the single master base station and equalize in space the consumption of the control and management resources and the air interface signaling resources within the master base station.

When the master base station fails (such as a local RLF or mobile handover failure), the primary secondary base station quickly replace the master base station, upgrade to the new master base station, and continue controlling a set of common secondary base stations to perform multi-connectivity data transmission operations for the UE, thereby preventing data transmission on an SCG RL side from being interrupted and avoiding a loss of a traffic data packet. A configuration and resource reservation and synergy related to the original master base station do not need to be released and deleted immediately, because the primary secondary base station which upgrades to the new master base station may continue maintaining the configuration and resource reservation and synergy related to the original master base station as the master base station so that the multi-connectivity data transmission operations may be continued for the UE.

The enhanced multi-connectivity data transmission mode of the UE under the master base station and the primary secondary base station may increase robustness of the control and management of the multi-connectivity data transmission, reduce unnecessary terrestrial and air interface signaling overheads caused by reestablishing a radio link after a failed working node is deleted, and mitigate user experience on a communication connection interruption, which has more importance for a user traffic type, Ultra Reliable and Low Latency Communications (URLLC).

FIG. 11 is a flowchart 2 of a radio link management method according to an embodiment of the present invention. As shown in FIG. 11, the radio link management method includes step 1101.

In step 1101, a primary secondary base station receives a configuration performed by a master base station. The master base station supports a first type of control operation performed on the primary secondary base station and a common secondary base station, and the primary secondary base station supports a second type of control operation performed on the common secondary base station, where the first type of control operation includes the second type of control operation.

In the embodiments of the present invention, the primary secondary base station in a set of secondary base stations is a special secondary base station, and the rest of the set of secondary base stations except the primary secondary base station is the common secondary base station. In the embodiments of the present invention, the step in which a target secondary base station receives the configuration performed by the master base station includes a step described below. The target secondary base station receives the configuration performed by the master base station via Xn interface signaling. The configuration includes a first type of configuration and a second type of configuration. The first type of configuration is used for implementing the first type of control operation supported by the master base station and performed on the primary secondary base station; and the second type of configuration is used for implementing the second type of control operation supported by the primary secondary base station and performed on the common secondary base station.

In the embodiments of the present invention, a control plane link and a user plane link exist between the primary secondary base station and a network element in a CN.

When a control plane link between the master base station and the network element in the CN is in a normal operation state, the control plane link between the primary secondary base station and the network element in the CN in a configured and unactivated state, and the user plane link between the primary secondary base station and the network element in the CN is in an activated state and operates normally.

When the control plane link between the master base station and the network element in the CN is in an abnormal operation state, the control plane link and the user plane link between the primary secondary base station and the network element in the CN are in the activated state and operate normally.

In the embodiments of the present invention, a control plane link and a user plane link exist between the primary secondary base station and a UE.

The control plane link between the primary secondary base station and the UE and a control plane link between the master base station and the UE are simultaneously in the activated state and operate normally to simultaneously and jointly transmit their respective RRC signaling of the primary secondary base station and the master base station.

The user plane link between the primary secondary base station and the UE and a user plane link between the common secondary base station and the UE are simultaneously in the activated state and operate normally to simultaneously and jointly transmit their respective user plane data of the primary secondary base station and the common secondary base station.

In the embodiments of the present invention, the primary secondary base station supporting the second type of control operation performed on the common secondary base station includes the following step: the primary secondary base station performs at least one of the following control operations on the common secondary base station:
a radio link addition operation, a radio link deletion operation, a radio link reconfiguration operation, an operation for updating a serving cell group of the UE, and a data radio bearer (DRB) reconfiguration operation.

In the embodiments of the present invention, the method further includes a step described below.

After the primary secondary base station successfully performs the second type of control operation on the common secondary base station, the master base station and the primary secondary base station synchronize a control operation result through an Xn interface to synchronize a state of configuring operation resources for the common secondary base station. In the embodiments of the present invention, the method further includes a step described below.

In case of a radio link connection failure or a mobile handover failure between the master base station and the UE, the primary secondary base station is allowed to be activated by the master base station. When the primary secondary base station is in the activated state, the primary secondary base station performs the following additional tasks: performing a task carried on a control plane link between a new master base station and the network element in the CN, and performing a task carried on a control plane link between the new master base station and the UE. The radio link management method in the embodiments of the present invention will be further described in detail below in conjunction with specific applications.

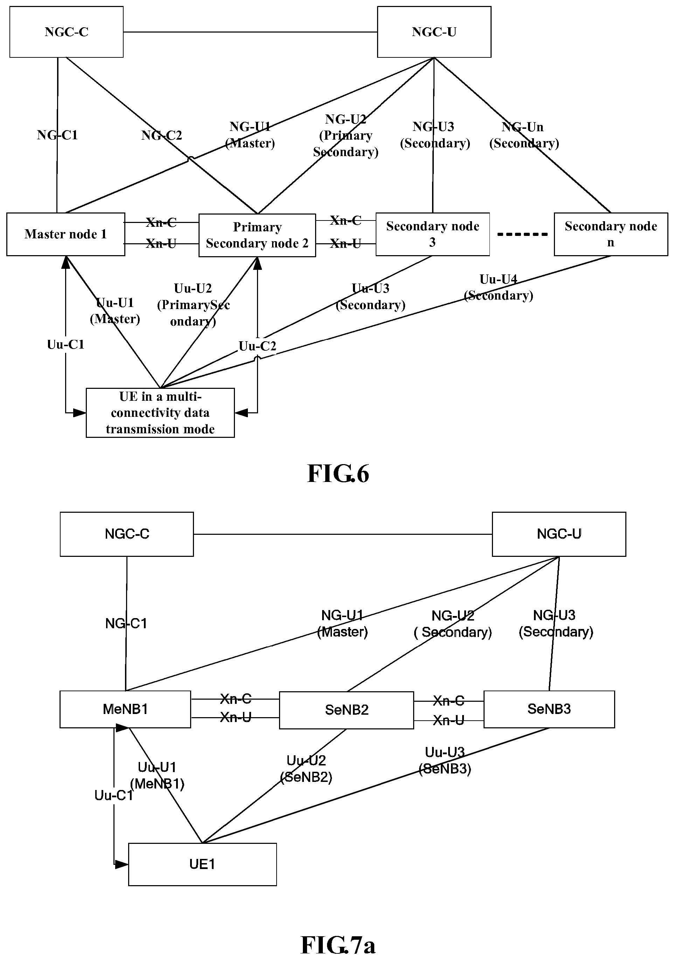

A principle of an enhanced multi-connectivity data transmission mode is as shown in FIG. 6. Compared with FIG. 5, main differences and inventive points are described below.

In FIG. 5, only one master node1 serves as a master base station for multi-connectivity data transmission. In FIG. 6, a special secondary node may be selected from a set of secondary nodes configured in association with the master node1 and taken as a primary secondary node2 after an additional configuration is performed on the special secondary node. The primary secondary node2 still serves as a logical role of the secondary node with respect to the master node1. Therefore, the master node1 may perform logical operations related to the secondary node (such as addition/reconfiguration/deletion) on the primary secondary node2 in a conventional manner. Meanwhile, with respect to other common secondary nodes, the primary secondary node2 may play a logical control role of the master node1 to some degree. Therefore, the primary secondary node2 may preform operations related to the master node1 (such as addition/reconfiguration/deletion), to some degree, on the other common secondary nodes in an enhanced manner.

The master node1 selects an appropriate secondary node as the primary secondary node2 based on an RRM measurement result/radio load and other factors through a local RRM algorithm, and then performs an enhanced configuration on the primary secondary node2 via Xn interface signaling. That is, the primary secondary node2 needs to complete an original configuration related to the secondary base station just as the logical role of the secondary node, and meanwhile complete a necessary additional configuration related to the primary secondary base station as an enhanced role of an additional primary secondary node.

In a configuration process of the primary secondary node2, the master node1 needs to perform an enhanced configuration related to the primary secondary node2 on a UE via RRC signaling through a Uu air interface. That is, the UE needs to establish a logical association of the common secondary node with the primary secondary node2 to implement an original necessary configuration related to a radio link between the secondary base station and the UE and meanwhile establish an enhanced logical association with the primary secondary node2 to implement a necessary additional configuration related to a radio link between the primary secondary base station and the UE.

Similar to the master node1, the primary secondary node2 has independent control plane link NG-C2 and user plane link NG-U2 (primary secondary) with a network element, NGC, in a core network. However, when a control plane link NG-C1 of the master node1 is in a normal operation state, the NG-C2 is only in a pre-configured and unactivated state. That is, when the NG-C1 is activated and operates normally, the NG-C2 cannot be adopted to transmit NG interface signaling related to the core network. However, the NG-U2 (primary secondary) may be in an activated state, the normal operation state, as other common NG-U (secondary) for transmitting uplink and downlink user plane traffic data packets with the core network.

Similar to the master node1, the primary secondary node2 has independent air interface RRC link Uu-C2 and user plane radio link Uu-U2 (primary secondary). The Uu-C2 may be in the activated state as the Uu-C1 for transmitting their respective RRC signaling related to the primary secondary node2 and the master node1. The Uu-U2 (primary secondary) may be in the activated state as other common Uu-U (secondary) for transmitting uplink and downlink user traffic data packets through the Uu air interface.

After the master node1 determines and configures a specific target secondary node as the primary secondary node2, the additional configuration related to the primary secondary node2 needs to be performed on the UE through the air interface RRC signaling Uu-C1. The UE needs to take the primary secondary node2 as the common secondary node to implement a necessary configuration and resource reservation and synergy related to a SCG RL, and meanwhile take the primary secondary node2 as the primary secondary base station to implement an additional configuration and resource reservation and synergy related to a primary SCG RL.

As the primary secondary base station, the primary secondary node2 may also perform control operations on the common secondary node and the SCG RL like the Master Node1, such as addition, deletion and reconfiguration of the common secondary node and the SCG RL, a change of a UE serving cell group, and radio link resource reconfiguration. After the primary secondary node2 successfully performs some control operation, the primary secondary node2 needs to report a control operation result to the master node1 through an Xn-C interface to synchronize and update related configuration information with the master node1.

In case of a local MCG RL failure or a mobile handover failure on the master node1 side, the master node1 upgrade the primary secondary node2 as the master base station according to the RRM algorithm or specific requirements. The primary secondary node2 becomes a new master node1 logically, the NG-C2 needs to be activated to assume the role of the original NG-C1, and the activated Uu-C2 needs to be maintained and operate normally to assume the role of the original Uu-C1. The old master node1 may be released and deleted from a multi-connectivity configuration of the UE, or be maintained as the common secondary node or a new primary secondary node2 (because the old primary secondary node2 has been upgraded the new master node1).

If the old master node1 is released and deleted from the multi-connectivity configuration of the UE, the old NG-C1/U1 (master) and the old Uu-C1/U1 (master) must be deleted and released, and the UE delates all the configuration and resource reservation and synergy associated with the old master node1. If the old master node1 is maintained as the common secondary node, the old NG-C1 and the old Uu-C1 may be deleted and released, the old NG-U1 (master) is reconfigured as the common NG-U (secondary), and the old Uu-U1 (master) is reconfigured as the Uu-U (secondary); and the UE reconfigures and maintains all the configuration and resource reservation and synergy associated with the user plane of the old master node1 and deletes all the configuration and resource reservation and synergy associated with the control plane of the old master node1. If the old master node1 is maintained as the new primary secondary node2, the old NG-C1 is reconfigured as the NG-C2, the old NG-U1 (master) is reconfigured as the NG-U2 (primary secondary), the old Uu-U1 (master) is reconfigured as the Uu-U2 (primary secondary), and the old Uu-C1 is reconfigured as the Uu-C2; and the UE reconfigures and maintains all the configuration and resource reservation and synergy associated with the user plane and control plane of the old master node1.

### Embodiment 1

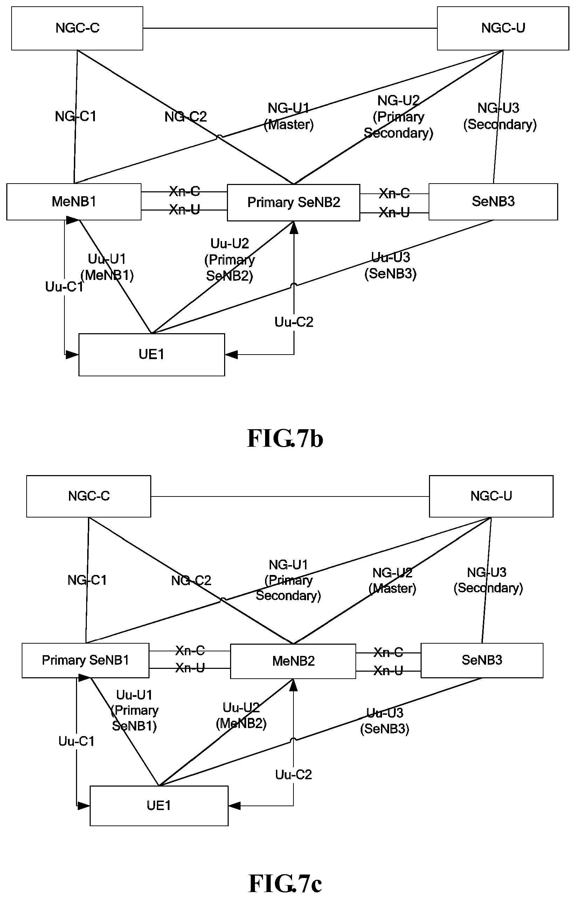

As shown in diagrams in FIG. 7, in an eLTE system (evolved LTE under a 5G framework), three eLTE eNBs are connected to a same NGC, a network element in a core network, and a UE1 is simultaneously covered by the three eNBs and has basic conditions for eLTE multi-connectivity data transmission. A macro eNB1 has the largest signal coverage and is suitable to serve as a master eNB (MeNB1); the micro eNB2 and eNB3 have a relatively small coverage and are suitable to serve as a secondary eNB (SeNB2/3). All eLTE eNBs and the UE1 have capabilities to support "an enhanced multi-connectivity data transmission node under control of master plus primary secondary base stations" in the present invention.

In step 101, a master base station, the MeNB1, establishes a multi-connectivity data transmission mode under control of a single MeNB1 as shown in FIG. 7a for the UE1 according to conventional multi-connectivity data transmission establishment procedures (specific details may be referred to LTE dual-connectivity operation establishment procedures in TS 36.300). Since an Xn terrestrial interface involves secondary node addition establishment procedures under an XnAP protocol (negotiation and confirmation of a bidirectional resource configuration of the MeNB1 and the SeNB2/3) and a Uu air interface involves RRC connection reconfiguration procedures, tri-connectivity configuration and resource reservation and synergy are performed on the UE1. After the tri-connectivity has been established, a unique RRC control plane link on a Uu-C1 interface exists between the UE1 and the MeNB1 as the master base station, and a unique NGAP control plane link on an NG-C1 interface exists between the NGC in the core network and the MeNB1. The control plane links are used for control and management of the multi-connectivity data transmission of the UE1. Meanwhile, a user plane link on a Uu-U2/3 interface exists between the UE1 and the SeNB2/SeNB3 as a secondary base station, to share transmission of a user traffic data packet with a Uu-U1 user plane link; and a user plane link (such as an SCG bearer) on an NG-U2/3 interface exists between the NGC and the SeNB2/SeNB3, to share transmission of the user traffic data packet with an NG-U1 user plane link. In this conventional mode, all the UE1, the SeNB2 and the SeNB3 are controlled and managed by the unique MeNB1.

In step 102, at a later moment, the MeNB1 determines to establish an enhanced multi-connectivity data transmission mode user the control of the MeNB1 plus a primary SeNB2 as shown in FIG. 7b for the UE1 according to an RRM measurement report of the UE1, an eNB status report of the SeNB2, and local resource status statistics and analysis. Since the Xn terrestrial interface involves primary secondary node addition establishment procedures under the XnAP protocol (the procedures upgrade the SeNB2 to the primary SeNB2 and the MeNB1 needs to perform additional configuration and resource reservation and synergy) and the Uu air interface involves RRC connection reconfiguration procedures, related configuration and resource reservation and synergy are performed on the UE1. After the establishment is completed, in addition to the RRC control plane link on the Uu-C1 interface with the MeNB1 as the master base station, the UE1 also has an RRC control plane link on a Uu-C2 interface with the primary SeNB2 as the primary secondary base station. (The RRC control plane links are both in an activated state.) In addition to the NGAP control plane link on the NG-C1 interface with the MeNB1, the NGC in the core network also has an NGAP control plane link on an NG-C2 interface with the primary SeNB2 (which is in a deactivated state temporarily). The control plane links are used for control and management of the enhanced multi-connectivity data transmission of the UE1. Meanwhile, the user plane link on the Uu-U2/3 interface exists between the UE1 and the primary SeNB2/SeNB3 as the secondary base station, to share transmission of the user traffic data packet with the Uu-U1 user plane link; and the user plane link (such as the SCG bearer) on the NG-U2/3 interface exists between the NGC and the primary SeNB2/SeNB3, to share transmission of the user traffic data packet with the NG-U1 user plane link. In this enhanced mode, all the UE1, the primary SeNB2, and the SeNB3 are controlled and managed by the master base station, the MeNB1. In addition, the UE1 and the SeNB3 are also controlled and managed by the primary secondary base station, the primary SeNB2.

In step 103, at a later moment, the master base station, the MeNB1, learns that the Uu-U1 (MeNB1) user plane link fails (cannot normally transmit UE-specific signaling and user data) based on a report of a master cell group radio link failure (MCG RLF) of the UE1 and determines that an enhanced multi-connectivity data transmission mode under control of an MeNB2 plus a primary SeNB1 shown in FIG. 7c is switched for the UE1. Since the Xn terrestrial interface involves master node change establishment procedures under the XnAP protocol (the procedures upgrade the primary SeNB2 to the MeNB2 as a new master base station) and primary secondary node addition establishment procedures (the procedures make the MeNB1 become the primary SeNB1 as a new primary secondary base station); and the Uu air interface involves the RRC connection reconfiguration procedures, related configuration and resource reservation and synergy are performed on the UE1. After the establishment is completed, in addition to the RRC control plane link on the Uu-C2 interface with the MeNB2 as the new master base station, the UE1 also has an RRC control plane link on the Uu-C1 interface with the primary SeNB1 as the new primary secondary base station. (RRC reestablishment needs to be performed on the Uu-C1 interface and then the RRC control plane link can stay in the activated state). In addition to the NGAP control plane link on the NG-C2 interface with the MeNB2, the NGC in the core network also has an NGAP control plane link on the NG-C1 interface with the primary SeNB1 (which is in the deactivated state temporarily). The control plane links are used for the control and management of the enhanced multi-connectivity data transmission of the UE1. Meanwhile, the user plane link on the Uu-U1/3 interface exists between the UE1 and the primary SeNB1/SeNB3, to share transmission of the user traffic data packet with the Uu-U2 user plane link; and the user plane link (such as the SCG bearer) on the NG-U1/3 interface exists between the NGC and the primary SeNB1/SeNB3, to share transmission of the user traffic data packet with the NG-U2 user plane link. In this enhanced mode, all the UE1, the primary SeNB1, and the SeNB3 are controlled and managed by the master base station, the MeNB2. In addition, the UE1 and the SeNB3 are also controlled and managed by the primary secondary base station, the primary SeNB1.

### Embodiment 2

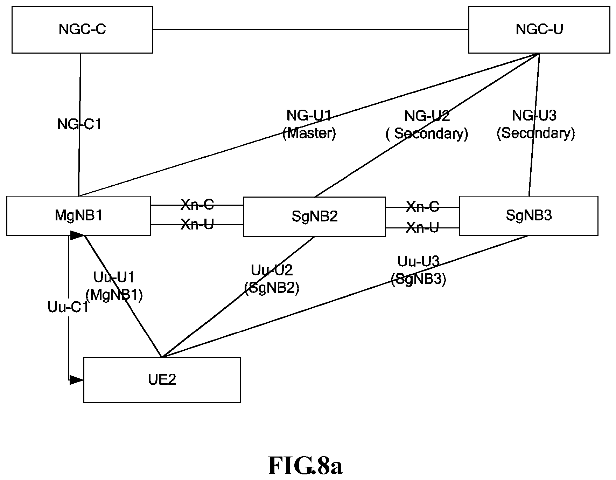

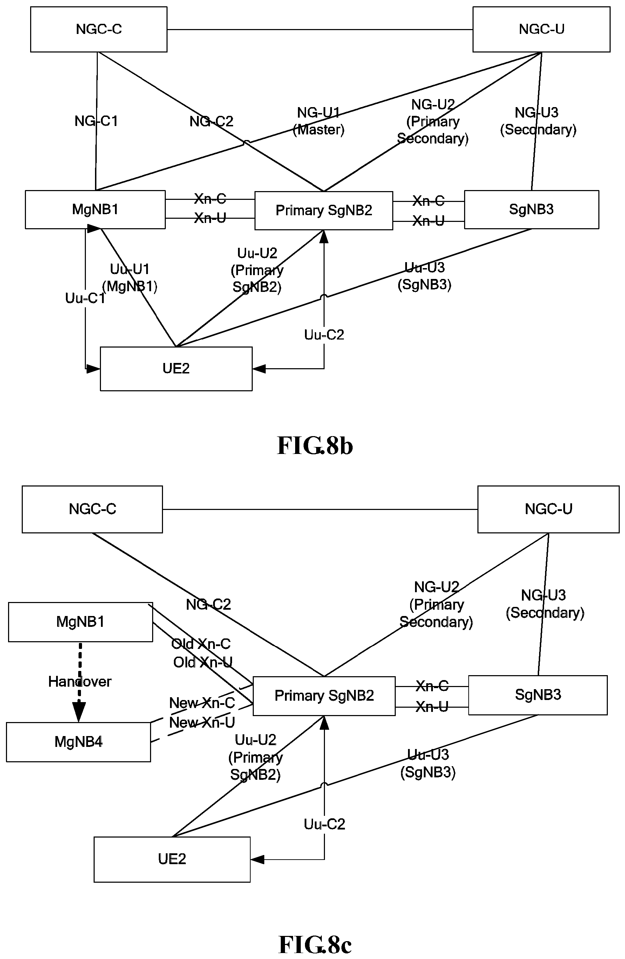

As shown in diagrams in FIG. 8, in an NR gNB system (a new RAT under a 5G framework), three NR gNBs are connected to a same NGC, a network element in a core network, and a UE2 is simultaneously covered by the three gNBs and has basic conditions for NR multi-connectivity data transmission. A macro gNB1 has the largest signal coverage and is suitable to serve as a master gNB (MgNB1); the micro gNB2 and gNB3 have a relatively small coverage and are suitable to serve as a secondary gNB (SgNB2/3). All NR gNBs and the UE2 have capabilities to support "an enhanced multi-connectivity data transmission node under control of the master plus primary secondary base stations" in the present invention.

In step 201, a master base station, the MgNB1, establishes a multi-connectivity data transmission mode under control of a single MgNB1 as shown in FIG. 8a for the UE2 according to NR multi-connectivity data transmission establishment procedures (specific details may be referred to NR multi-connectivity operation establishment procedures in TS 38.300). Since an Xn terrestrial interface involves SgNB addition establishment procedures under an XnAP protocol (negotiation and confirmation of a bidirectional resource configuration of the MgNB1 and the SgNB2/3) and a Uu air interface involves RRC connection reconfiguration procedures, tri-connectivity configuration and resource reservation and synergy are performed on the UE2. After the tri-connectivity has been established, a unique RRC control plane link on a Uu-C1 interface exists between the UE2 and the MgNB1 as the master base station, and a unique NGAP control plane link on an NG-C1 interface exists between the NGC in the core network and the MgNB1. The control plane links are used for control and management of the multi-connectivity data transmission of the UE2. Meanwhile, a user plane link on a Uu-U2/3 interface exists between the UE2 and the SgNB2/SgNB3 as a secondary base station, to share transmission of a user traffic data packet with a Uu-U1 user plane link; and a user plane link (such as an SCG bearer) on an NG-U2/3 interface exists between the NGC and the SgNB2/SgNB3, to share transmission of the user traffic data packet with an NG-U1 user plane link. In this conventional mode, all the UE2, the SgNB2 and the SgNB3 are controlled and managed by the unique MgNB1.

In step 202, at a later moment, the MgNB1 determines to establish an enhanced multi-connectivity data transmission mode user the control of the MgNB1 plus a primary SgNB2 as shown in FIG. 8b for the UE2 according to an RRM measurement report of the UE2, a gNB status report of the SgNB2, and local resource status statistics and analysis. Since the Xn terrestrial interface involves primary secondary node addition establishment procedures under the XnAP protocol (the procedures upgrade the SgNB2 to the primary SgNB2 and the MgNB1 needs to perform additional configuration and resource reservation and synergy) and the Uu air interface involves RRC connection reconfiguration procedures, related configuration and resource reservation and synergy are performed on the UE2. After the establishment is completed, in addition to the RRC control plane link on the Uu-C1 interface with the MgNB1 as the master base station, the UE2 also has an RRC control plane link on a Uu-C2 interface with the primary SgNB2 as the primary secondary base station. (The RRC control plane links are both in an activated state.) In addition to the NGAP control plane link on the NG-C1 interface with the MgNB1, the NGC in the core network also has an NGAP control plane link on an NG-C2 interface with the primary SgNB2 (which is in a deactivated state temporarily). The control plane links are used for control and management of the enhanced multi-connectivity data transmission of the UE2. Meanwhile, a user plane link on a Uu-U2/3 interface exists between the UE2 and the primary SgNB2/SgNB3 as the secondary base station, to share transmission of the user traffic data packet with the Uu-U1 user plane link; and the user plane link (such as the SCG bearer) on the NG-U2/3 interface exists between the NGC and the primary SgNB2/SgNB3, to share transmission of the user traffic data packet with the NG-U1 user plane link. In this enhanced mode, all the UE2, the primary SgNB2, and the SgNB3 are controlled and managed by the master base station, the MgNB1. In addition, the UE2 and the SgNB3 are also controlled and managed by the primary secondary base station, the primary SgNB2.

In step 203, at a later moment, the master base station, the MgNB1, prepares to perform a mobile handover to a target gNB4 for the UE2 based on the RRM measurement report of the UE2. In this handover process, the Uu-U1 (MgNB1) user plane link must be interrupted for a period of time (cannot normally transmit UE-specific signaling and user data) so that the MgNB1 determines that an enhanced multi-connectivity data transmission mode under control of only the primary SgNB2 shown in FIG. 8c is temporarily switched for the UE2. Since the Xn terrestrial interface involves master node suspend procedures under the XnAP protocol (the procedures make the primary SgNB2 serve as the primary secondary base station independently to control a multi-connectivity operation of the UE2 without the MgNB1) and master node handover procedures (the procedures make the gNB4 serve as a new master base station, a target MgNB4); and the Uu air interface involves the RRC connection reconfiguration procedures, related configuration and resource reservation and synergy are performed on the UE2. In the handover process for the UE2, the RRC control plane link on the Uu-C2 interface exists between the UE2 and the primary SgNB2 as the primary secondary base station, and the NGAP control plane link (in the activated state) on the NG-C2 interface exists between the NGC in the core network and the primary SgNB2. The control plane links are used for control and management of the enhanced multi-connectivity data transmission of the UE2. Meanwhile, the user plane link on the Uu-U2/3 interface exists between the UE2 and the primary SgNB2/SgNB3 as the secondary base station, to share transmission of the user traffic data packet with the Uu-U1 user plane link; and the user plane link (such as an SCG bearer) on the NG-U2/3 interface exists between the NGC and the primary SgNB2/SgNB3, to share transmission of the user traffic data packet with the NG-U1 user plane link. In this enhanced mode, the MgNB1 is temporarily in a handover state and cannot control and manage the UE2, the primary SgNB2, and the SgNB3 until the MgNB4 is switched to as a new master base station; and the UE2 and the SgNB3 are temporarily controlled and managed by only the primary SgNB2.

### Embodiment 3

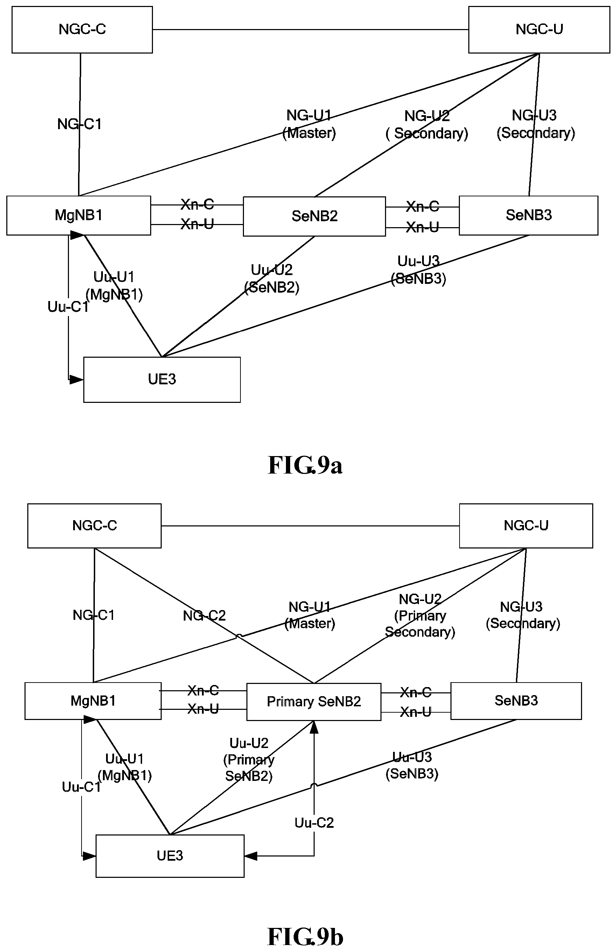

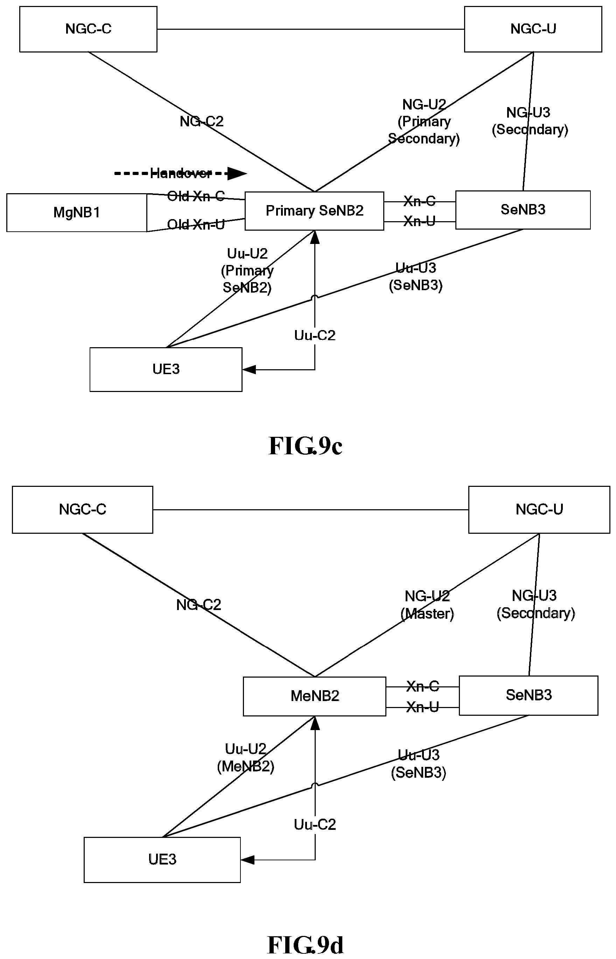

As shown in diagrams in FIG. 9, in system in which an NR gNB is tightly coupled with an eLTE eNB (a new RAT is tightly coupled with the eLTE under a 5G framework), one NR gNB and two eLTE eNBs are connected to a same NGC, a network element in a core network, and a UE3 is simultaneously covered by the three base stations and has basic conditions for NR-eLTE tightly coupled multi-connectivity data transmission. A macro gNB1 has the largest signal coverage and is suitable to serve as a master gNB (MgNB1); the micro eNB2 and eNB3 have a relatively small coverage and are suitable to serve as a secondary eNB (SeNB2/3). All the NR gNB, the eLTE eNBs and the UE3 have capabilities to support "an enhanced multi-connectivity data transmission node under control of master plus primary secondary base stations" in the present invention.

In step 301, a master base station, the MgNB1, establishes a tightly coupled multi-connectivity data transmission mode under control of a single MgNB1 as shown in FIG. 9a for the UE3 according to NR tightly coupled multi-connectivity data transmission establishment procedures (specific details may be referred to NR tightly coupled multi-connectivity operation establishment procedures in TS 38.300). Since an Xn terrestrial interface involves secondary node addition establishment procedures under an XnAP protocol (negotiation and confirmation of a bidirectional resource configuration of the MgNB1 and the SeNB2/3) and a Uu air interface involves RRC connection reconfiguration procedures, tightly coupled tri-connectivity configuration and resource reservation and synergy are performed on the UE3. After the tightly coupled tri-connectivity has been established, a unique RRC control plane link on a Uu-C1 interface exists between the UE3 and the MgNB1 as the master base station, and a unique NGAP control plane link on an NG-C1 interface exists between the NGC in the core network and the MgNB1. The control plane links are used for control and management of the tightly coupled multi-connectivity data transmission of the UE3. Meanwhile, a user plane link on a Uu-U2/3 interface exists between the UE3 and the SeNB2/SeNB3, to share transmission of a user traffic data packet with a Uu-U1 user plane link; and a user plane link (such as an SCG bearer) on an NG-U2/3 interface exists between the NGC and the SeNB2/SeNB3, to share transmission of the user traffic data packet with an NG-U1 user plane link. In this conventional mode, all the UE3, the SeNB2 and the SeNB3 are controlled and managed by the unique MgNB1.

In step 302, at a later moment, the MgNB1 determines to establish an enhanced multi-connectivity data transmission mode user the control of the MgNB1 plus a primary SeNB2 as shown in FIG. 9b for the UE3 according to an RRM measurement report of the UE3, an eNB status report of the SeNB2, and local resource status statistics and analysis. Since the Xn terrestrial interface involves primary secondary node addition establishment procedures under the XnAP protocol (the procedures upgrade the SeNB2 to the primary SeNB2 and the MgNB1 needs to perform additional configuration and resource reservation and synergy) and the Uu air interface involves RRC connection reconfiguration procedures, related configuration and resource reservation and synergy are performed on the UE3. After the establishment is completed, in addition to the RRC control plane link on the Uu-C1 interface with the MgNB1 as the master base station, the UE3 also has an RRC control plane link on a Uu-C2 interface with the primary SeNB2 as the primary secondary base station. (The RRC control plane links are both in an activated state.) In addition to the NGAP control plane link on the NG-C1 interface with the MgNB1, the NGC in the core network also has an NGAP control plane link on an NG-C2 interface with the primary SeNB2 (which is in a deactivated state temporarily). The control plane links are used for control and management of the enhanced tightly coupled multi-connectivity data transmission of the UE3. Meanwhile, the user plane link on the Uu-U2/3 interface exists between the UE3 and the primary SeNB2/SeNB3 as the secondary base station, to share transmission of the user traffic data packet with the Uu-U1 user plane link; and the user plane link (such as the SCG bearer) on the NG-U2/3 interface exists between the NGC and the primary SeNB2/SeNB3, to share transmission of the user traffic data packet with the NG-U1 user plane link. In this enhanced mode, all the UE3, the primary SeNB2, and the SeNB3 are controlled and managed by the master base station, the MgNB1. In addition, the UE3 and the SeNB3 are also controlled and managed by the primary secondary base station, the primary SeNB2.

In step 303, at a later moment, when an MCG RLF occurs between the master base station, the MgNB1, and the UE3, that is, the Uu-U1 (MgNB1) user plane link must be interrupted (cannot normally transmit UE-specific signaling and user data) so that the MgNB1 prepares to perform a mobile handover to a target base station, the primary SeNB2, for the UE3 based on the RRM measurement report of the UE3 and the eNB status report of the primary SeNB2 and determines that an enhanced multi-connectivity data transmission mode under control of only the primary SeNB2 shown in FIG. 9c is temporarily switched for the UE3. Since the Xn terrestrial interface involves master node suspend procedures under the XnAP protocol (the procedures make the primary SeNB2 serve as the primary secondary base station independently to control a tightly coupled multi-connectivity operation of the UE3 without the MgNB1) and master node handover procedures (the procedures make the primary SeNB2 serve as a new master base station, a target MeNB2); and the Uu air interface involves the RRC connection reconfiguration procedures, related configuration and resource reservation and synergy are performed on the UE3. In the handover process for the UE3, the RRC control plane link on the Uu-C2 interface exists between the UE3 and the primary SeNB2 as the primary secondary base station, and the NGAP control plane link (in the activated state) on the NG-C2 interface exists between the NGC in the core network and the primary SeNB2. The control plane links are used for control and management of the enhanced tightly coupled multi-connectivity data transmission of the UE3. Meanwhile, the user plane link on the Uu-U2/3 interface exists between the UE3 and the primary SeNB2/SeNB3 as the secondary base station, to share transmission of the user traffic data packet with the Uu-U1 user plane link; and the user plane link (such as the SCG bearer) on the NG-U2/3 interface exists between the NGC and the primary SeNB2/SeNB3, to share transmission of the user traffic data packet with the NG-U1 user plane link. In this enhanced mode, the MgNB1 is temporarily in a handover state and cannot control and manage the UE3, the primary SeNB2, and the SeNB3 until the MeNB2 is switched to as a new master base station; and the UE3 and the SeNB3 are temporarily controlled and managed by only the primary SeNB2.

In step 304, at a later moment, the original master base station, the MgNB1, successfully switches to the target base station, the primary SeNB2 so that the primary SeNB2 upgrades to a new master base station, the MeNB2 and the enhanced multi-connectivity data transmission mode under control of only the MeNB2 as shown in FIG. 9d is quickly switched to for the UE3. Since the Xn terrestrial interface involves master node resume procedures under the XnAP protocol (the procedures upgrade the primary SeNB2 to the new master base station, the MeNB2 to independently control the tightly coupled multi-connectivity operation of the UE3), and the Uu air interface involves the RRC connection reconfiguration procedures, related configuration and resource reservation and synergy are performed on the UE3. After the handover process for the UE3, the RRC control plane link on the Uu-C2 interface exists between the UE3 and the MeNB2 as the master base station, and the NGAP control plane link (in the activated state) on the NG-C2 interface exists between the NGC in the core network and the MeNB2. The control plane links are used for control and management of the enhanced tightly coupled multi-connectivity data transmission of the UE3. Meanwhile, the user plane link on the Uu-U3 interface exists between the UE3 and the SeNB3 as the primary secondary base station, to share transmission of the user traffic data packet with the Uu-U2 user plane link; and the user plane link (such as the SCG bearer) on the NG-U2/3 interface exists between the NGC and the MeNB2/SeNB3, to share transmission of the user traffic data packet with the NG-U2 user plane link. In this enhanced mode, the MgNB1 and the related interface link resources are released and deleted, and the UE3 and the SeNB3 are controlled and managed by only the MeNB2.

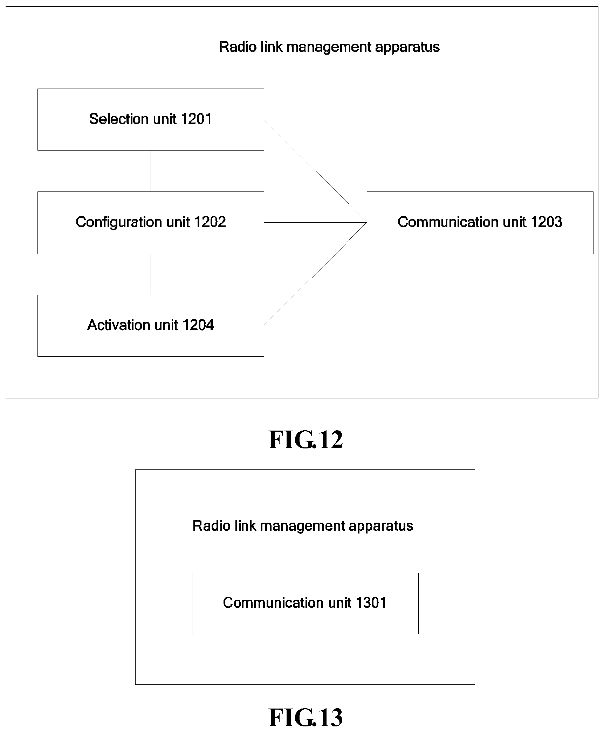

FIG. 12 is a structural diagram 1 of a radio link management apparatus according to an embodiment of the present invention. The apparatus is applied to a master base station. As shown in FIG. 12, the apparatus includes a selection unit 1201 and a configuration unit 1202. The selection unit 1201 is configured to select a target secondary base station from a set of secondary base stations.

The configuration unit 1202 is configured to perform a configuration on the target secondary base station, and take the configured target secondary base station as a primary secondary base station.

The master base station supports a first type of control operation performed on the primary secondary base station and a common secondary base station, and the primary secondary base station supports a second type of control operation performed on the common secondary base station, where the first type of control operation includes the second type of control operation.

The primary secondary base station in the set of secondary base stations is a special secondary base station, and the rest of the set of secondary base stations except the primary secondary base station is the common secondary base station.

In the embodiments of the present invention, the selection unit 1201 is further configured to select the target secondary base station from the set of secondary base stations based on a radio resource management (RRM) measurement result and/or a radio bearer load condition of a cell supported by each of the set of secondary base stations.

The configuration unit 1202 is further configured to perform the configuration on the target secondary base station via Xn interface signaling. The configuration includes a first type of configuration and a second type of configuration. The first type of configuration is used for implementing the first type of control operation supported by the master base station and performed on the primary secondary base station; and the second type of configuration is used for implementing the second type of control operation supported by the primary secondary base station and performed on the common secondary base station.

The configuration unit 1202 is further configured to perform a configuration on the common secondary base station via the Xn interface signaling. The configuration includes only the first type of configuration.

In the embodiments of the present invention, the configuration unit 1202 is further configured to perform a configuration related to the primary secondary base station on a UE via RRC signaling through a Uu interface. The configuration related to the primary secondary base station includes a third type of configuration and a fourth type of configuration. The third type of configuration is used for implementing control plane link logic between the UE and the primary secondary base station; and the fourth type of configuration is used for implementing user plane link logic between the UE and the primary secondary base station.

In the embodiments of the present invention, a control plane link and a user plane link exist between the primary secondary base station and a network element in a CN.

When a control plane link between the master base station and the network element in the CN is in a normal operation state, the control plane link between the primary secondary base station and the network element in the CN in a configured and unactivated state, and the user plane link between the primary secondary base station and the network element in the CN is in an activated state and operates normally.

When the control plane link between the master base station and the network element in the CN is in an abnormal operation state, the control plane link and the user plane link between the primary secondary base station and the network element in the CN are in the activated state and operate normally.

In the embodiments of the present invention, a control plane link and a user plane link exist between the primary secondary base station and the UE.

The control plane link between the primary secondary base station and the UE and a control plane link between the master base station and the UE are simultaneously in the activated state and operate normally to simultaneously and jointly transmit their respective RRC signaling of the primary secondary base station and the master base station.

The user plane link between the primary secondary base station and the UE and a user plane link between the common secondary base station and the UE are simultaneously in the activated state and operate normally to simultaneously and jointly transmit their respective user plane data of the primary secondary base station and the common secondary base station.

In the embodiments of the present invention, the primary secondary base station supporting the second type of control operation performed on the common secondary base station includes the following step: the primary secondary base station performs at least one of the following control operations on the common secondary base station:
a radio link addition operation, a radio link deletion operation, a radio link reconfiguration operation, an operation for updating a serving cell group of the UE, and a data radio bearer (DRB) reconfiguration operation.

In the embodiments of the present invention, the apparatus further includes a communication unit 1203. The communication unit 1203 is configured to, after the primary secondary base station successfully performs the second type of control operation on the common secondary base station, synchronize a control operation result with the primary secondary base station via the Xn interface signaling to synchronize a state of configuring operation resources for the common secondary base station.

In the embodiments of the present invention, the apparatus further includes an activation unit 1204. In case of a radio link connection failure or a mobile handover failure between the master base station and the UE, the activation unit 1204 is configured to allow the master base station to activate the primary secondary base station. When the primary secondary base station is in the activated state, the primary secondary base station performs the following additional tasks: performing a task carried on a control plane link between a new master base station and the network element in the CN, and performing a task carried on a control plane link between the new master base station and the UE.

In practical applications, functions implemented by various units of the radio link management apparatus may all be implemented by a central processing unit (CPU), a micro processor unit (MPU), a digital signal processor (DSP), a field programmable gate array (FPGA) or the like located in the radio link management apparatus.

It should be understood by those skilled in the art that the radio link management apparatus according to the embodiments of the present invention may be understood with reference to any one of the embodiments of the radio link management method according to the embodiments of the present invention.

FIG. 13 is a structural diagram 2 of a radio link management apparatus according to an embodiment of the present invention. The apparatus is applied to a primary secondary base station. As shown in FIG. 13, the apparatus includes a communication unit 1301.

The communication unit 1301 is configured to receive a configuration performed by a master base station as the primary secondary base station. The master base station supports a first type of control operation performed on the primary secondary base station and a common secondary base station, and the primary secondary base station supports a second type of control operation performed on the common secondary base station, where the first type of control operation includes the second type of control operation.

The primary secondary base station in a set of secondary base stations is a special secondary base station, and the rest of the set of secondary base stations except the primary secondary base station is the common secondary base station.

In the embodiments of the present invention, the communication unit 1301 is further configured to receive the configuration performed by the master base station via Xn interface signaling. The configuration includes a first type of configuration and a second type of configuration. The first type of configuration is used for implementing the first type of control operation supported by the master base station and performed on the primary secondary base station; and the second type of configuration is used for implementing the second type of control operation supported by the primary secondary base station and performed on the common secondary base station.

In the embodiments of the present invention, a control plane link and a user plane link exist between the primary secondary base station and a network element in a CN.

When a control plane link between the master base station and the network element in the CN is in a normal operation state, the control plane link between the primary secondary base station and the network element in the CN in a configured and unactivated state, and the user plane link between the primary secondary base station and the network element in the CN is in an activated state and operates normally.

When the control plane link between the master base station and the network element in the CN is in an abnormal operation state, the control plane link and the user plane link between the primary secondary base station and the network element in the CN are in the activated state and operate normally.

In the embodiments of the present invention, a control plane link and a user plane link exist between the primary secondary base station and a UE.

The control plane link between the primary secondary base station and the UE and a control plane link between the master base station and the UE are simultaneously in the activated state and operate normally to simultaneously and jointly transmit their respective RRC signaling of the primary secondary base station and the master base station.

The user plane link between the primary secondary base station and the UE and a user plane link between the common secondary base station and the UE are simultaneously in the activated state and operate normally to simultaneously and jointly transmit their respective user plane data of the primary secondary base station and the common secondary base station.

In the embodiments of the present invention, the primary secondary base station supporting the second type of control operation performed on the common secondary base station includes the following step: the primary secondary base station performs at least one of the following control operations on the common secondary base station:
a radio link addition operation, a radio link deletion operation, a radio link reconfiguration operation, an operation for updating a serving cell group of the UE, and a data radio bearer (DRB) reconfiguration operation.

In the embodiments of the present invention, the apparatus further includes the communication unit 1301. The communication unit 1301 is configured to, after the primary secondary base station successfully performs the second type of control operation on the common secondary base station, synchronize a control operation result with the master base station through an Xn interface to synchronize a state of configuring operation resources for the common secondary base station.

In the embodiments of the present invention, in case of a radio link connection failure or a mobile handover failure between the master base station and the UE, the primary secondary base station is allowed to be activated by the master base station. When the primary secondary base station is in the activated state, the primary secondary base station performs the following additional tasks: performing a task carried on a control plane link between a new master base station and the network element in the CN, and performing a task carried on a control plane link between the new master base station and the UE.

It should be understood by those skilled in the art that the radio link management apparatus according to the embodiments of the present invention may be understood with reference to any one of the embodiments of the radio link management method according to the embodiments of the present invention.

In practical applications, functions implemented by various units of the radio link management apparatus may all be implemented by a CPU, an MPU, a DSP, an FPGA or the like located in the radio link management apparatus.

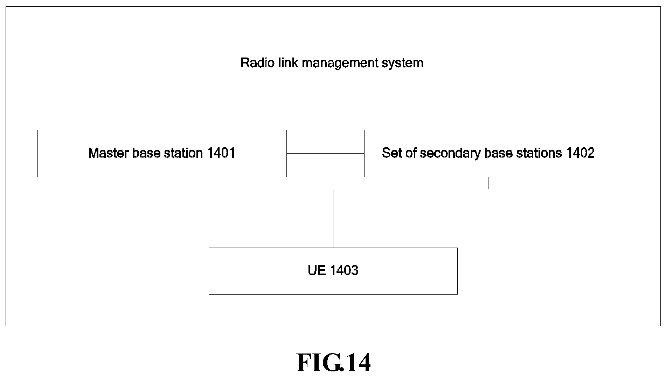

In addition, the embodiments of the present invention further provide a radio link management system. As shown in FIG. 14, the system includes a master base station 1401 and a set of secondary base stations 1402.

The master base station 1401 is configured to select a target secondary base station from the set of secondary base stations 1402, perform a configuration on the target secondary base station, and take the configured target secondary base station as a primary secondary base station. The master base station supports a first type of control operation performed on the primary secondary base station and a common secondary base station, and the primary secondary base station supports a second type of control operation performed on the common secondary base station, where the first type of control operation includes the second type of control operation. The primary secondary base station in the set of secondary base stations is a special secondary base station, and the rest of the set of secondary base stations except the primary secondary base station is the common secondary base station.

In the embodiments of the present invention, the master base station 1401 is further configured to select the target secondary base station from the set of secondary base stations based on a radio resource management (RRM) measurement result and/or a radio bearer load condition of a cell supported by each of the set of secondary base stations, and preform the configuration on the target secondary base station via Xn interface signaling. The configuration includes a first type of configuration and a second type of configuration. The first type of configuration is used for implementing the first type of control operation supported by the master base station and performed on the primary secondary base station; and the second type of configuration is used for implementing the second type of control operation supported by the primary secondary base station and performed on the common secondary base station.

In the embodiments of the present invention, the system further includes a UE 1403.

The master base station 1401 is further configured to perform a configuration related to the primary secondary base station on the UE 1403 via RRC signaling through a Uu interface. The configuration related to the primary secondary base station includes a third type of configuration and a fourth type of configuration. The third type of configuration is used for implementing control plane link logic between the UE 1403 and the primary secondary base station; and the fourth type of configuration is used for implementing user plane link logic between the UE 1403 and the primary secondary base station.

In the embodiments of the present invention, a control plane link and a user plane link exist between the primary secondary base station and the UE.

The control plane link between the primary secondary base station and the UE and a control plane link between the master base station and the UE are simultaneously in the activated state and operate normally to simultaneously and jointly transmit their respective RRC signaling of the primary secondary base station and the master base station.

The user plane link between the primary secondary base station and the UE and a user plane link between the common secondary base station and the UE are simultaneously in the activated state and operate normally to simultaneously and jointly transmit their respective user plane data of the primary secondary base station and the common secondary base station.

For a more convenient understanding of the solutions in the embodiments of the present invention, abbreviations and full names of the technical terms in the embodiments of the present invention may be referred to the following table 1.

**Table 1**

| Abbreviation | Full Name |
|---|---|
| LTE | Long Term Evolution |
| MAC | Medium Access Control |
| RLC | Radio Link Control |
| PDCP | Packet Data Convergence Protocol |
| RRC | Radio Resource Control |
| DRB | Data Radio Bearer |
| SRB | Signaling Radio Bearer |
| SAP | Service Access Point |
| SDU | Service Data Unit |
| PDU | Packet Data Unit |
| AM | Acknowledged Mode |
| UM | Unacknowledged Mode |
| TM | Transparent Mode |
| ARQ | Automatic Repeat Request |
| WLAN | Wireless Local Area Network |
| eMBB | Enhanced Mobile Broadband |
| URLLC | Ultra Reliable and Low Latency Communications |
| mMTC | Massive Machine-Type-Communications |
| RAT | Radio Access Technology |
| 5G-NR | 5G New Radio |
| TCP | Transmission Control Protocol |
| BBU | Base Band Unit |
| RRU | Remote Radio Unit |
| CU | Central Unit |
| RU | Remote Unit |
| UE | User Equipment |
| SN | Sequence Number |
| RSN | Reception Sequence Number |
| RX_HFN | Reception Hyper Frame Number |
| Maximum_RS N | Maximum Reception Sequence Number |
| RL | Radio Link |
| MCG RLF | Master Cell Group Radio Link Failure |
| SCG RLF | Secondary Cell Group Radio Link Failure |
| RRM | Radio Resource Management |
| Uu-C | Uu- Control Plane |
| Uu-U | Uu- User Plane |
| NG-C | Next Generation- Control Plane |
| NG-U | Next Generation- User Plane |

It should be understood by those skilled in the art that the embodiments of the present invention may be provided as methods, systems, or computer program products. Therefore, the present invention may adopt a form of a hardware embodiment, a software embodiment, or a combination of hardware and software embodiments. In addition, the present invention may adopt a form of a computer program product implemented on one or more computer-usable storage media (including, but not limited to, a disk memory, an optical memory and the like) which include computer-usable program codes.

The present invention is described with reference to flowcharts and/or block diagrams of methods, devices (systems) and computer program products according to the embodiments of the present invention. It should be understood that computer program instructions implement each flow and/or block in the flowcharts and/or block diagrams and a combination of flows and/or blocks in the flowcharts and/or block diagrams. These computer program instructions can be provided to a general-purpose computer, a special-purpose computer, an embedded processor or a processor of another programmable data processing device to produce a machine so that instructions executed by a computer or the processor of another programmable data processing device produce a means for implementing functions specified in one or more flows in the flowcharts and/or one or more blocks in the block diagrams.

These computer program instructions can also be stored in a computer-readable memory which can direct the computer or another programmable data processing device to operate in a particular manner so that the instructions stored in the computer-readable memory produce a manufactured product including an instructing means. The instructing means implements the functions specified in one or more flows in the flowcharts and/or one or more blocks in the block diagrams.

These computer program instructions can also be loaded onto the computer or another programmable data processing device so that a series of operation steps are performed on the computer or another programmable device to produce processing implemented by the computer. Therefore, instructions executed on the computer or another programmable device provide steps for implementing the functions specified in one or more flows in the flowcharts and/or one or more blocks in the block diagrams.

Accordingly, the embodiments of the present invention further provide a storage medium. The storage medium stores computer programs for executing the radio link management method according to the embodiments of the present invention.

## Claims

1. A radio link management method, comprising: selecting, by a master base station, a target secondary base station from a set of secondary base stations, wherein the set of secondary base stations comprises the target secondary base station and one or more remaining secondary base station(s), performing a configuration on the target secondary base station, and taking the configured target secondary base station as a primary secondary base station; wherein the master base station supports a first type of control operation performed on the primary secondary base station and a remaining secondary base station , and the primary secondary base station supports a second type of control operation performed on the remaining secondary base station (1001);
**characterized in that**,
the method further comprises:
in case of a radio link connection failure or a mobile handover failure between the master base station and a user equipment, UE, allowing the master base station to activate the primary secondary base station, wherein when the primary secondary base station is in an activated state, the primary secondary base station replaces the master base station, upgrades to a new master base station, and performs the following additional tasks: carrying a control plane link between the new master base station and a network element in a core network, CN, and carrying a control plane link between the new master base station and the UE;
wherein the second type of control operation comprises at least one of the following control operations: a radio link addition operation, a radio link deletion operation, a radio link reconfiguration operation, an operation for updating a serving cell group of the UE, and a data radio bearer, DRB, reconfiguration operation;
wherein the first type of control operation comprises the second type of control operation and the additional tasks;
wherein an independent control plane link and an independent user plane link exist between the primary secondary base station and a network element in the CN, when a control plane link between the master base station and the network element in the CN is in a normal operation state, the control plane link between the primary secondary base station and the network element in the CN in a configured and unactivated state, and the user plane link between the primary secondary base station and the network element in the CN is in an activated state and operates normally, and when the control plane link between the master base station and the network element in the CN is in an abnormal operation state, the control plane link and the user plane link between the primary secondary base station and the network element in the CN are in the activated state and operate normally; and
wherein an independent control plane link and an independent user plane link exist between the primary secondary base station and the UE, the control plane link between the primary secondary base station and the UE and a control plane link between the master base station and the UE are simultaneously in an activated state and operate normally to simultaneously and jointly transmit respective radio resource control, RRC, signaling of the primary secondary base station and the master base station, and the user plane link between the primary secondary base station and the UE and a user plane link between the remaining secondary base station and the UE are simultaneously in the activated state and operate normally to simultaneously and jointly transmit respective user plane data of the primary secondary base station and the remaining secondary base station.

2. The radio link management method of claim 1, wherein the performing a configuration on the target secondary base station comprises:
performing the configuration on the target secondary base station via Xn interface signaling, wherein the configuration comprises a first type of configuration and a second type of configuration; the first type of configuration is used for implementing the first type of control operation supported by the master base station and performed on the primary secondary base station; and the second type of configuration is used for implementing the second type of control operation supported by the primary secondary base station and performed on the remaining secondary base station.

3. The radio link management method of claim 2, further comprising:
performing, by the master base station, a configuration on the remaining secondary base station via the Xn interface signaling, wherein the configuration comprises only the first type of configuration.

4. The radio link management method of claim 1, further comprising:
performing, by the master base station, a configuration related to the primary secondary base station on the UE via radio resource control, RRC, signaling through a Uu interface, wherein the configuration related to the primary secondary base station comprises a third type of configuration and a fourth type of configuration; the third type of configuration is used for implementing control plane link logic between the UE and the primary secondary base station; and the fourth type of configuration is used for implementing user plane link logic between the UE and the primary secondary base station.

5. The radio link management method of claim 1, further comprising:
after the primary secondary base station successfully performs the second type of control operation on the remaining secondary base station, synchronizing, by the master base station and the primary secondary base station, a control operation result via Xn interface signaling to synchronize a state of configuring operation resources for the remaining secondary base station.

6. A radio link management method, comprising:
receiving, by a target secondary base station, a configuration performed by a master base station to be served as a primary secondary base station; wherein the target secondary base station is comprised in a set of secondary base stations, the set of secondary base stations comprising the target secondary base station and one or more remaining secondary base station(s), wherein the master base station supports a first type of control operation performed on the primary secondary base station and a remaining secondary base station of the set of secondary base stations except the primary secondary base station, and the primary secondary base station supports a second type of control operation performed on the remaining secondary base station (1101);
**characterized in that**,
the method further comprising:
in case of a radio link connection failure or a mobile handover failure between the master base station and a user equipment, UE, allowing the primary secondary base station to be activated by the master base station, wherein when the primary secondary base station is in an activated state, the primary secondary base station replaces the master base station, upgrades to a new master base station, and performs the following additional tasks: carrying a control plane link between a new master base station and a network element in a core network, CN, and carrying a control plane link between the new master base station and the UE;
wherein the second type of control operation comprises at least one of the following control operations: a radio link addition operation, a radio link deletion operation, a radio link reconfiguration operation, an operation for updating a serving cell group of the UE, and a data radio bearer, DRB, reconfiguration operation;
wherein the first type of control operation comprises the second type of control operation and the additional tasks;
wherein an independent control plane link and an independent user plane link exist between the primary secondary base station and a network element in the CN, when a control plane link between the master base station and the network element in the CN is in a normal operation state, the control plane link between the primary secondary base station and the network element in the CN in a configured and unactivated state, and the user plane link between the primary secondary base station and the network element in the CN is in an activated state and operates normally, and when the control plane link between the master base station and the network element in the CN is in an abnormal operation state, the control plane link and the user plane link between the primary secondary base station and the network element in the CN are in the activated state and operate normally; and
wherein an independent control plane link and an independent user plane link exist between the primary secondary base station and the UE, the control plane link between the primary secondary base station and the UE and a control plane link between the master base station and the UE are simultaneously in an activated state and operate normally to simultaneously and jointly transmit respective radio resource control, RRC, signaling of the primary secondary base station and the master base station, and the user plane link between the primary secondary base station and the UE and a user plane link between the remaining secondary base station and the UE are simultaneously in the activated state and operate normally to simultaneously and jointly transmit respective user plane data of the primary secondary base station and the remaining secondary base station.

7. The radio link management method of claim 6, wherein the receiving, by a target secondary base station, a configuration performed by a master base station comprises:
receiving, by the target secondary base station, the configuration performed by the master base station via Xn interface signaling, wherein the configuration comprises a first type of configuration and a second type of configuration; the first type of configuration is used for implementing the first type of control operation supported by the master base station and performed on the primary secondary base station; and the second type of configuration is used for implementing the second type of control operation supported by the primary secondary base station and performed on the remaining secondary base station.

8. A radio link management apparatus, applied to a master base station, comprising:
a selection unit (1201), configured to select a target secondary base station from a set of secondary base stations; wherein the set of secondary base stations comprises the target secondary base station and one or more remaining secondary base station(s); and
a configuration unit (1202), configured to perform a configuration on the target secondary base station, and take the configured target secondary base station as a primary secondary base station; wherein the master base station supports a first type of control operation performed on the primary secondary base station and a remaining secondary base station, and the primary secondary base station supports a second type of control operation performed on the remaining secondary base station;
**characterized in that**,
the apparatus further comprises:
an activation unit (1204), configured to, in case of a radio link connection failure or a mobile handover failure between the master base station and a user equipment, UE, allow the master base station to activate the primary secondary base station, wherein when the primary secondary base station is in an activated state, the primary secondary base station replaces the master base station, upgrades to a new master base station, and performs the following additional tasks: carrying a control plane link between the new master base station and a network element in a core network, CN, and carrying a control plane link between the new master base station and the UE;
wherein the second type of control operation comprises at least one of the following control operations: a radio link addition operation, a radio link deletion operation, a radio link reconfiguration operation, an operation for updating a serving cell group of the UE, and a data radio bearer, DRB, reconfiguration operation;
wherein the first type of control operation comprises the second type of control operation and the additional tasks;
wherein an independent control plane link and an independent user plane link exist between the primary secondary base station and a network element in the CN, when a control plane link between the master base station and the network element in the CN is in a normal operation state, the control plane link between the primary secondary base station and the network element in the CN in a configured and unactivated state, and the user plane link between the primary secondary base station and the network element in the CN is in an activated state and operates normally, and when the control plane link between the master base station and the network element in the CN is in an abnormal operation state, the control plane link and the user plane link between the primary secondary base station and the network element in the CN are in the activated state and operate normally; and
wherein an independent control plane link and an independent user plane link exist between the primary secondary base station and the UE, the control plane link between the primary secondary base station and the UE and a control plane link between the master base station and the UE are simultaneously in an activated state and operate normally to simultaneously and jointly transmit respective radio resource control, RRC, signaling of the primary secondary base station and the master base station, and the user plane link between the primary secondary base station and the UE and a user plane link between the remaining secondary base station and the UE are simultaneously in the activated state and operate normally to simultaneously and jointly transmit respective user plane data of the primary secondary base station and the remaining secondary base station.

9. A radio link management apparatus, applied to a primary secondary base station, comprising:
a communication unit (1301), configured to receive a configuration performed by a master base station to be served as a primary secondary base station; wherein the target secondary base station is comprised in a set of secondary base stations, the set of secondary base stations comprising the target secondary base station and one or more remaining secondary base station(s), wherein the master base station supports a first type of control operation performed on the primary secondary base station and a remaining secondary base station of the set of secondary base stations except the primary secondary base station, and the primary secondary base station supports a second type of control operation performed on the remaining secondary base station;
**characterized in that**,
in case of a radio link connection failure or a mobile handover failure between the master base station and a user equipment, UE, the primary secondary base station is allowed to be activated by the master base station, wherein when the primary secondary base station is in an activated state, the primary secondary base station replaces the master base station, upgrades to a new master base station, and performs the following additional tasks: carrying a control plane link between the new master base station and a network element in a core network, CN, and carrying a control plane link between the new master base station and the UE;
wherein the second type of control operation comprises at least one of the following control operations: a radio link addition operation, a radio link deletion operation, a radio link reconfiguration operation, an operation for updating a serving cell group of the UE, and a data radio bearer, DRB, reconfiguration operation;
wherein the first type of control operation comprises the second type of control operation and the additional tasks;
wherein an independent control plane link and an independent user plane link exist between the primary secondary base station and a network element in the CN, when a control plane link between the master base station and the network element in the CN is in a normal operation state, the control plane link between the primary secondary base station and the network element in the CN in a configured and unactivated state, and the user plane link between the primary secondary base station and the network element in the CN is in an activated state and operates normally, and when the control plane link between the master base station and the network element in the CN is in an abnormal operation state, the control plane link and the user plane link between the primary secondary base station and the network element in the CN are in the activated state and operate normally; and
wherein an independent control plane link and an independent user plane link exist between the primary secondary base station and the UE, the control plane link between the primary secondary base station and the UE and a control plane link between the master base station and the UE are simultaneously in an activated state and operate normally to simultaneously and jointly transmit respective radio resource control, RRC, signaling of the primary secondary base station and the master base station, and the user plane link between the primary secondary base station and the UE and a user plane link between the remaining secondary base station and the UE are simultaneously in the activated state and operate normally to simultaneously and jointly transmit respective user plane data of the primary secondary base station and the remaining secondary base station.

10. A radio link management system, comprising: a master base station (1401) and a set of secondary base stations (1402); wherein
the master base station (1401) is configured to perform the radio link management method of any one of claims 1 to 5, and a target secondary base station, selected by the master base station (1401) from the set of secondary base stations (1402), is configured to perform the radio link management method of any one of claims 6 to 7.

11. A storage medium, storing computer-executable instructions which are configured to execute the radio link management method of any one of claims 1 to 5 or the radio link management method of any one of claims 6 to 7.

## Patentansprüche

1. Funkverbindungsverwaltungsverfahren, das Folgendes umfasst: Auswählen, durch eine Master-Basisstation, einer sekundären Ziel-Basisstation aus einer Reihe sekundärer Basisstationen, wobei die Reihe sekundärer Basisstationen die sekundäre Ziel-Basisstation und eine oder mehrere verbleibende sekundäre Basisstation(en) umfasst, Durchführen einer Konfiguration an der sekundären Ziel-Basisstation und Verwenden der konfigurierten sekundären Ziel-Basisstation als eine primäre sekundäre Basisstation; wobei die Master-Basisstation eine erste Art von Steueroperationen unterstützt, die an der primären sekundären Basisstation und einer verbleibenden sekundären Basisstation durchgeführt werden, und die primäre sekundäre Basisstation eine zweite Art von Steueroperationen unterstützt, die an der verbleibenden sekundären Basisstation (1001) durchgeführt werden;
**dadurch gekennzeichnet, dass**
das Verfahren weiter umfasst:
im Fall eines Funkverbindungsausfalls oder eines Misslingens der mobilen Übergabe zwischen der Master-Basisstation und einem Endgerät, UE, Gestatten der Master-Basisstation, die primäre sekundäre Basisstation zu aktivieren, wobei, wenn sich die primäre sekundäre Basisstation in einem aktivierten Zustand befindet, die primäre sekundäre Basisstation die Master-Basisstation ersetzt, zu einer neuen Master-Basisstation aufsteigt und die folgenden zusätzlichen Aufgaben durchführt: Tragen einer Steuerebenenverbindung zwischen der neuen Master-Basisstation und einem Netzelement in einem Kernnetz, CN, und Tragen einer Steuerebenenverbindung zwischen der neuen Master-Basisstation und dem UE;
wobei die zweite Art von Steueroperationen mindestens eine der folgenden Steueroperationen umfasst: eine Operation zum Hinzufügen einer Funkverbindung, eine Operation zum Löschen einer Funkverbindung, eine Operation zum Neukonfigurieren einer Funkverbindung, eine Operation zum Aktualisieren einer bedienenden Zellengruppe des UE und eine Operation zum Neukonfigurieren eines Datenfunkträgers, DRB;
wobei die erste Art von Steueroperationen die zweite Art von Steueroperationen und die zusätzlichen Aufgaben umfasst;
wobei eine unabhängige Steuerebenenverbindung und eine unabhängige Benutzerebenenverbindung zwischen der primären sekundären Basisstation und einem Netzelement im CN bestehen, wenn sich eine Steuerebenenverbindung zwischen der Master-Basisstation und dem Netzelement im CN in einem normalen Betriebszustand befindet, die Steuerebenenverbindung zwischen der primären sekundären Basisstation und dem Netzelement im CN sich in einem konfigurierten und nicht aktivierten Zustand befindet und die Benutzerebenenverbindung zwischen der primären sekundären Basisstation und dem Netzelement im CN sich in einem aktivierten Zustand befindet und normal arbeitet, und wenn sich die Steuerebenenverbindung zwischen der Master-Basisstation und dem Netzelement im CN in einem anormalen Betriebszustand befindet, die Steuerebenenverbindung und die Benutzerebenenverbindung zwischen der primären sekundären Basisstation und dem Netzelement im CN sich in dem aktivierten Zustand befinden und normal arbeiten; und
wobei eine unabhängige Steuerebenenverbindung und eine unabhängige Benutzerebenenverbindung zwischen der primären sekundären Basisstation und dem UE bestehen, die Steuerebenenverbindung zwischen der primären sekundären Basisstation und dem UE und eine Steuerebenenverbindung zwischen der Master-Basisstation und dem UE sich gleichzeitig in einem aktivierten Zustand befinden und normal arbeiten, um gleichzeitig und gemeinsam entsprechende Funkressourcensteuerung(RRC)-signalisierung der primären sekundären Basisstation und der Master-Basisstation zu übertragen, und die Benutzerebenenverbindung zwischen der primären sekundären Basisstation und dem UE und eine Benutzerebenenverbindung zwischen der verbleibenden sekundären Basisstation und dem UE sich gleichzeitig in dem aktivierten Zustand befinden und normal arbeiten, um gleichzeitig und gemeinsam entsprechende Benutzerebenendaten der primären sekundären Basisstation und der verbleibenden sekundären Basisstation zu übertragen.

2. Funkverbindungsverwaltungsverfahren nach Anspruch 1, wobei das Durchführen einer Konfiguration an der sekundären Ziel-Basisstation Folgendes umfasst:
Durchführen der Konfiguration an der sekundären Ziel-Basisstation über Xn-Schnittstellensignalisierung, wobei die Konfiguration einen ersten Konfigurationstyp und einen zweiten Konfigurationstyp umfasst; der erste Konfigurationstyp zum Implementieren der ersten Art von Steueroperationen verwendet wird, die von der Master-Basisstation unterstützt werden und an der primären sekundären Basisstation durchgeführt werden, und der zweite Konfigurationstyp zum Implementieren der zweiten Art von Steueroperationen verwendet wird, die von der primären sekundären Basisstation unterstützt werden und an der verbleibenden sekundären Basisstation durchgeführt werden.

3. Funkverbindungsverwaltungsverfahren nach Anspruch 2, das weiter umfasst:
Durchführen, durch die Master-Basisstation, einer Konfiguration an der verbleibenden sekundären Basisstation über die Xn-Schnittstellensignalisierung, wobei die Konfiguration nur den ersten Konfigurationstyp umfasst.

4. Funkverbindungsverwaltungsverfahren nach Anspruch 1, das weiter umfasst:
Durchführen, durch die Master-Basisstation, einer Konfiguration, die sich auf die primäre sekundäre Basisstation bezieht, auf dem UE über Funkressourcensteuerung(RRC)-signalisierung durch eine Uu-Schnittstelle, wobei die Konfiguration, die sich auf die primäre sekundäre Basisstation bezieht, einen dritten Konfigurationstyp und einen vierten Konfigurationstyp umfasst; wobei der dritte Konfigurationstyp zum Implementieren der Steuerebenenverbindungslogik zwischen dem UE und der primären sekundären Basisstation verwendet wird; und der vierte Konfigurationstyp zum Implementieren der Benutzerebenenverbindungslogik zwischen dem UE und der primären sekundären Basisstation verwendet wird.

5. Funkverbindungsverwaltungsverfahren nach Anspruch 1, das weiter umfasst:
nachdem die primäre sekundäre Basisstation erfolgreich die zweite Art von Steueroperationen an der verbleibenden sekundären Basisstation durchführt, Synchronisieren, durch die Master-Basisstation und die primäre sekundäre Basisstation, eines Steueroperationsergebnisses über Xn-Schnittstellensignalisierung, um einen Zustand der Konfiguration von Betriebsressourcen für die verbleibende sekundäre Basisstation zu synchronisieren.

6. Funkverbindungsverwaltungsverfahren, das Folgendes umfasst:
Empfangen, durch eine sekundäre Ziel-Basisstation, einer von einer Master-Basisstation durchgeführten Konfiguration, um als primäre sekundäre Basisstation bedient zu werden, wobei die sekundäre Ziel-Basisstation in einer Reihe sekundärer Basisstationen enthalten ist, wobei die Reihe sekundärer Basisstationen die sekundäre Ziel-Basisstation und eine oder mehrere verbleibende sekundäre Basisstation(en) umfasst, wobei die Master-Basisstation eine erste Art von Steueroperation unterstützt, die an der primären sekundären Basisstation und einer verbleibenden sekundären Basisstation der Reihe sekundärer Basisstationen mit Ausnahme der primären sekundären Basisstation durchgeführt werden, und die primäre sekundäre Basisstation eine zweite Art von Steueroperation unterstützt, die an der verbleibenden sekundären Basisstation (1101) durchgeführt werden;
**dadurch gekennzeichnet, dass**
das Verfahren weiter umfasst:
im Fall eines Funkverbindungsausfalls oder eines Misslingens der mobilen Übergabe zwischen der Master-Basisstation und einem Endgerät, UE, Gestatten der primären sekundären Basisstation, durch die Master-Basisstation aktiviert zu werden, wobei, wenn sich die primäre sekundäre Basisstation in einem aktivierten Zustand befindet, die primäre sekundäre Basisstation die Master-Basisstation ersetzt, zu einer neuen Master-Basisstation aufsteigt und die folgenden zusätzlichen Aufgaben durchführt: Tragen einer Steuerebenenverbindung zwischen einer neuen Master-Basisstation und einem Netzelement in einem Kernnetz, CN, und Tragen einer Steuerebenenverbindung zwischen der neuen Master-Basisstation und dem UE;
wobei die zweite Art von Steueroperationen mindestens eine der folgenden Steueroperationen umfasst: eine Operation zum Hinzufügen einer Funkverbindung, eine Operation zum Löschen einer Funkverbindung, eine Operation zum Neukonfigurieren einer Funkverbindung, eine Operation zum Aktualisieren einer bedienenden Zellengruppe des UE und eine Operation zum Neukonfigurieren eines Datenfunkträgers, DRB;
wobei die erste Art von Steueroperationen die zweite Art von Steueroperationen und die zusätzlichen Aufgaben umfasst;
wobei eine unabhängige Steuerebenenverbindung und eine unabhängige Benutzerebenenverbindung zwischen der primären sekundären Basisstation und einem Netzelement im CN bestehen, wenn sich eine Steuerebenenverbindung zwischen der Master-Basisstation und dem Netzelement im CN in einem normalen Betriebszustand befindet, die Steuerebenenverbindung zwischen der primären sekundären Basisstation und dem Netzelement im CN sich in einem konfigurierten und nicht aktivierten Zustand befindet und die Benutzerebenenverbindung zwischen der primären sekundären Basisstation und dem Netzelement im CN sich in einem aktivierten Zustand befindet und normal arbeitet, und wenn sich die Steuerebenenverbindung zwischen der Master-Basisstation und dem Netzelement im CN in einem abnormalen Betriebszustand befindet, die Steuerebenenverbindung und die Benutzerebenenverbindung zwischen der primären sekundären Basisstation und dem Netzelement im CN sich in dem aktivierten Zustand befinden und normal arbeiten; und
wobei eine unabhängige Steuerebenenverbindung und eine unabhängige Benutzerebenenverbindung zwischen der primären sekundären Basisstation und dem UE bestehen, die Steuerebenenverbindung zwischen der primären sekundären Basisstation und dem UE und eine Steuerebenenverbindung zwischen der Master-Basisstation und dem UE sich gleichzeitig in einem aktivierten Zustand befinden und normal arbeiten, um gleichzeitig und gemeinsam entsprechende Funkressourcensteuerung(RRC)-signalisierung der primären sekundären Basisstation und der Master-Basisstation zu übertragen, und die Benutzerebenenverbindung zwischen der primären sekundären Basisstation und dem UE und eine Benutzerebenenverbindung zwischen der verbleibenden sekundären Basisstation und dem UE sich gleichzeitig in dem aktivierten Zustand befinden und normal arbeiten, um gleichzeitig und gemeinsam entsprechende Benutzerebenendaten der primären sekundären Basisstation und der verbleibenden sekundären Basisstation zu übertragen.

7. Funkverbindungsverwaltungsverfahren nach Anspruch 6, wobei das Empfangen, durch eine sekundäre Ziel-Basisstation, einer durch eine Master-Basisstation durchgeführten Konfiguration Folgendes umfasst:
Empfangen, durch die sekundäre Ziel-Basisstation, der von der Master-Basisstation durchgeführten Konfiguration über Xn-Schnittstellensignalisierung, wobei die Konfiguration einen ersten Konfigurationstyp und einen zweiten Konfigurationstyp umfasst; der erste Konfigurationstyp zum Implementieren der ersten Art von Steueroperationen verwendet wird, die von der Master-Basisstation unterstützt werden und an der primären sekundären Basisstation durchgeführt werden, und der zweite Konfigurationstyp zum Implementieren der zweiten Art von Steueroperationen verwendet wird, die durch die primären sekundäre Basisstation unterstützt werden und an der verbleibenden sekundären Basisstation durchgeführt werden.

8. Funkverbindungsverwaltungsvorrichtung, die auf eine Master-Basisstation angewandt wird, umfassend:
eine Auswahleinheit (1201), die so konfiguriert ist, dass sie eine sekundäre Ziel-Basisstation aus einer Reihe sekundärer Basisstationen auswählt; wobei die Reihe sekundärer Basisstationen die sekundäre Ziel-Basisstation und eine oder mehrere verbleibende sekundäre Basisstation(en) umfasst; und
eine Konfigurationseinheit (1202), die so konfiguriert ist, dass sie eine Konfiguration an der sekundären Ziel-Basisstation durchführt und die konfigurierte sekundäre Ziel-Basisstation als primäre sekundäre Basisstation nimmt; wobei die Master-Basisstation eine erste Art von Steueroperationen unterstützt, die an der primären sekundären Basisstation und einer verbleibenden sekundären Basisstation durchgeführt werden, und die primäre sekundäre Basisstation eine zweite Art von Steueroperationen unterstützt, die an der verbleibenden sekundären Basisstation durchgeführt werden;
**dadurch gekennzeichnet, dass**
die Vorrichtung weiter umfasst:
eine Aktivierungseinheit (1204), die dafür konfiguriert ist, im Fall eines Funkverbindungsausfalls oder eines Misslingens der mobilen Übergabe zwischen der Master-Basisstation und einem Endgerät, UE, der Master-Basisstation zu gestatten, die primäre sekundäre Basisstation zu aktivieren, wobei, wenn sich die primäre sekundäre Basisstation in einem aktivierten Zustand befindet, die primäre sekundäre Basisstation die Master-Basisstation ersetzt, zu einer neuen Master-Basisstation aufsteigt und die folgenden zusätzlichen Aufgaben durchführt: Tragen einer Steuerebenenverbindung zwischen der neuen Master-Basisstation und einem Netzelement in einem Kernnetz, CN, und Tragen einer Steuerebenenverbindung zwischen der neuen Master-Basisstation und dem UE;
wobei die zweite Art von Steueroperationen mindestens eine der folgenden Steueroperationen umfasst: eine Operation zum Hinzufügen einer Funkverbindung, eine Operation zum Löschen einer Funkverbindung, eine Operation zum Neukonfigurieren einer Funkverbindung, eine Operation zum Aktualisieren einer bedienenden Zellengruppe des UE und eine Operation zum Neukonfigurieren eines Datenfunkträgers, DRB;
wobei die erste Art von Steueroperationen die zweite Art von Steueroperationen und die zusätzlichen Aufgaben umfasst;
wobei eine unabhängige Steuerebenenverbindung und eine unabhängige Benutzerebenenverbindung zwischen der primären sekundären Basisstation und einem Netzelement im CN bestehen, wenn sich eine Steuerebenenverbindung zwischen der Master-Basisstation und dem Netzelement im CN in einem normalen Betriebszustand befindet, die Steuerebenenverbindung zwischen der primären sekundären Basisstation und dem Netzelement im CN sich in einem konfigurierten und nicht aktivierten Zustand befindet und die Benutzerebenenverbindung zwischen der primären sekundären Basisstation und dem Netzelement im CN sich in einem aktivierten Zustand befindet und normal arbeitet, und wenn sich die Steuerebenenverbindung zwischen der Master-Basisstation und dem Netzelement im CN in einem abnormalen Betriebszustand befindet, die Steuerebenenverbindung und die Benutzerebenenverbindung zwischen der primären sekundären Basisstation und dem Netzelement im CN sich in dem aktivierten Zustand befinden und normal arbeiten; und
wobei eine unabhängige Steuerebenenverbindung und eine unabhängige Benutzerebenenverbindung zwischen der primären sekundären Basisstation und dem UE bestehen, die Steuerebenenverbindung zwischen der primären sekundären Basisstation und dem UE und eine Steuerebenenverbindung zwischen der Master-Basisstation und dem UE sich gleichzeitig in einem aktivierten Zustand befinden und normal arbeiten, um gleichzeitig und gemeinsam entsprechende Funkressourcensteuerung(RRC)-signalisierung der primären sekundären Basisstation und der Master-Basisstation zu übertragen, und die Benutzerebenenverbindung zwischen der primären sekundären Basisstation und dem UE und eine Benutzerebenenverbindung zwischen der verbleibenden sekundären Basisstation und dem UE sich gleichzeitig in dem aktivierten Zustand befinden und normal arbeiten, um gleichzeitig und gemeinsam entsprechende Benutzerebenendaten der primären sekundären Basisstation und der verbleibenden sekundären Basisstation zu übertragen.

9. Funkverbindungsverwaltungsvorrichtung, die auf eine primäre sekundäre Basisstation angewandt wird, umfassend:
eine Kommunikationseinheit (1301), die dafür konfiguriert ist, eine von einer Master-Basisstation durchgeführte Konfiguration zu empfangen, um als primäre sekundäre Basisstation bedient zu werden, wobei die sekundäre Ziel-Basisstation in einer Reihe sekundärer Basisstationen enthalten ist, wobei die Reihe sekundärer Basisstationen die sekundäre Ziel-Basisstation und eine oder mehrere verbleibende sekundäre Basisstation(en) umfasst, wobei die Master-Basisstation eine erste Art von Steueroperation unterstützt, die an der primären sekundären Basisstation und einer verbleibenden sekundären Basisstation der Reihe sekundärer Basisstationen mit Ausnahme der primären sekundären Basisstation durchgeführt werden, und die primäre sekundäre Basisstation eine zweite Art von Steueroperation unterstützt, die an der verbleibenden sekundären Basisstation durchgeführt werden;
**dadurch gekennzeichnet, dass**
im Fall eines Funkverbindungsausfalls oder eines Misslingens der mobilen Übergabe zwischen der Master-Basisstation und einem Endgerät, UE, der primären sekundären Basisstation gestattet wird, durch die Master-Basisstation aktiviert zu werden, wobei, wenn sich die primäre sekundäre Basisstation in einem aktivierten Zustand befindet, die primäre sekundäre Basisstation die Master-Basisstation ersetzt, zu einer neuen Master-Basisstation aufsteigt und die folgenden zusätzlichen Aufgaben durchführt: Tragen einer Steuerebenenverbindung zwischen der neuen Master-Basisstation und einem Netzelement in einem Kernnetz, CN, und Tragen einer Steuerebenenverbindung zwischen der neuen Master-Basisstation und dem UE;
wobei die zweite Art von Steueroperationen mindestens eine der folgenden Steueroperationen umfasst: eine Operation zum Hinzufügen einer Funkverbindung, eine Operation zum Löschen einer Funkverbindung, eine Operation zum Neukonfigurieren einer Funkverbindung, eine Operation zum Aktualisieren einer bedienenden Zellengruppe des UE und eine Operation zum Neukonfigurieren eines Datenfunkträgers, DRB;
wobei die erste Art von Steueroperationen die zweite Art von Steueroperationen und die zusätzlichen Aufgaben umfasst;
wobei eine unabhängige Steuerebenenverbindung und eine unabhängige Benutzerebenenverbindung zwischen der primären sekundären Basisstation und einem Netzelement im CN bestehen, wenn sich eine Steuerebenenverbindung zwischen der Master-Basisstation und dem Netzelement im CN in einem normalen Betriebszustand befindet, die Steuerebenenverbindung zwischen der primären sekundären Basisstation und dem Netzelement im CN sich in einem konfigurierten und nicht aktivierten Zustand befindet und die Benutzerebenenverbindung zwischen der primären sekundären Basisstation und dem Netzelement im CN sich in einem aktivierten Zustand befindet und normal arbeitet, und wenn sich die Steuerebenenverbindung zwischen der Master-Basisstation und dem Netzelement im CN in einem abnormalen Betriebszustand befindet, die Steuerebenenverbindung und die Benutzerebenenverbindung zwischen der primären sekundären Basisstation und dem Netzelement im CN sich in dem aktivierten Zustand befinden und normal arbeiten; und
wobei eine unabhängige Steuerebenenverbindung und eine unabhängige Benutzerebenenverbindung zwischen der primären sekundären Basisstation und dem UE bestehen, die Steuerebenenverbindung zwischen der primären sekundären Basisstation und dem UE und eine Steuerebenenverbindung zwischen der Master-Basisstation und dem UE sich gleichzeitig in einem aktivierten Zustand befinden und normal arbeiten, um gleichzeitig und gemeinsam entsprechende Funkressourcensteuerung(RRC)-signalisierung der primären sekundären Basisstation und der Master-Basisstation zu übertragen, und die Benutzerebenenverbindung zwischen der primären sekundären Basisstation und dem UE und eine Benutzerebenenverbindung zwischen der verbleibenden sekundären Basisstation und dem UE sich gleichzeitig in dem aktivierten Zustand befinden und normal arbeiten, um gleichzeitig und gemeinsam entsprechende Benutzerebenendaten der primären sekundären Basisstation und der verbleibenden sekundären Basisstation zu übertragen.

10. Funkverbindungsverwaltungssystem, das Folgendes umfasst: eine Master-Basisstation (1401) und eine Reihe sekundärer Basisstationen (1402); wobei
die Master-Basisstation (1401) so konfiguriert ist, dass sie das Funkverbindungsverwaltungsverfahren nach einem der Ansprüche 1 bis 5 durchführt, und eine sekundäre Ziel-Basisstation, die von der Master-Basisstation (1401) aus der Reihe sekundärer Basisstationen (1402) ausgewählt wird, so konfiguriert ist, dass sie das Funkverbindungsverwaltungsverfahren nach einem der Ansprüche 6 bis 7 durchführt.

11. Speicherungsmedium, das computerausführbare Befehle speichert, die so konfiguriert sind, dass sie das Funkverbindungsverwaltungsverfahren nach einem der Ansprüche 1 bis 5 oder das Funkverbindungsverwaltungsverfahren nach einem der Ansprüche 6 bis 7 ausführen.

## Revendications

1. Procédé de gestion de liaison radio, comprenant le fait de : sélectionner, par une station de base principale, une station de base secondaire cible d'un ensemble de stations de base secondaires, dans lequel l'ensemble de stations de base secondaires comprend la station de base secondaire cible et une ou plusieurs stations de base secondaires restantes, effectuer une configuration sur la station de base secondaire cible, et prendre de la station de base secondaire cible configurée comme station de base secondaire primaire ; dans lequel la station de base principale prend en charge un premier type d'opération de contrôle effectuée sur la station de base secondaire primaire et une station de base secondaire restante, et la station de base secondaire primaire prend en charge un deuxième type d'opération de contrôle effectuée sur la station de base secondaire restante (1001) ;
**caractérisé en ce que**,
le procédé comprend en outre :
en cas d'échec de connexion de liaison radio ou d'échec de transfert intercellulaire mobile entre la station de base principale et un équipement utilisateur, UE, le fait de permettre à la station de base principale d'activer la station de base secondaire primaire, dans lequel lorsque la station de base secondaire primaire est dans un état activé, la station de base secondaire primaire remplace la station de base principale, passe à une nouvelle station de base principale, et effectue les tâches supplémentaires suivantes : transporter une liaison de plan de contrôle entre la nouvelle station de base principale et un élément de réseau dans un réseau central, CN, et transporter une liaison de plan de contrôle entre la nouvelle station de base principale et l'UE ;
dans lequel le deuxième type d'opération de contrôle comprend au moins l'une des opérations de contrôle suivantes : une opération d'ajout de liaison radio, une opération de suppression de liaison radio, une opération de reconfiguration de liaison radio, une opération de mise à jour d'un groupe de cellules de desserte de l'UE, et une opération de reconfiguration de support radio de données, DRB ;
dans lequel le premier type d'opération de contrôle comprend le deuxième type d'opération de contrôle et les tâches supplémentaires ;
dans lequel une liaison de plan de contrôle indépendante et une liaison de plan d'utilisateur indépendante existent entre la station de base secondaire primaire et un élément de réseau dans le CN, lorsqu'une liaison de plan de contrôle entre la station de base principale et l'élément de réseau dans le CN est dans un état de fonctionnement normal, la liaison de plan de contrôle entre la station de base secondaire primaire et l'élément de réseau dans le CN dans un état configuré et non activé, et la liaison de plan d'utilisateur entre la station de base secondaire primaire et l'élément de réseau dans le CN est dans un état activé et fonctionne normalement, et lorsque la liaison de plan de contrôle entre la station de base principale et l'élément de réseau dans le CN est dans un état de fonctionnement anormal, la liaison de plan de contrôle et la liaison de plan d'utilisateur entre la station de base secondaire primaire et l'élément de réseau dans le CN sont dans l'état activé et fonctionnent normalement ; et
dans lequel une liaison de plan de contrôle indépendante et une liaison de plan d'utilisateur indépendante existent entre la station de base secondaire primaire et l'UE, la liaison de plan de contrôle entre la station de base secondaire primaire et l'UE et une liaison de plan de contrôle entre la station de base principale et l'UE sont simultanément dans un état activé et fonctionnent normalement pour transmettre simultanément et conjointement une signalisation de contrôle de ressources radio, RRC, respective de la station de base secondaire primaire et de la station de base principale, et la liaison de plan d'utilisateur entre la station de base secondaire primaire et l'UE et une liaison de plan d'utilisateur entre la station de base secondaire restante et l'UE sont simultanément dans l'état activé et fonctionnent normalement pour transmettre simultanément et conjointement des données de plan utilisateur respectives de la station de base secondaire primaire et de la station de base secondaire restante.

2. Procédé de gestion de liaison radio de la revendication 1, dans lequel le fait d'effectuer une configuration sur la station de base secondaire cible comprend le fait :
d'effectuer la configuration sur la station de base secondaire cible via une signalisation d'interface Xn, dans lequel la configuration comprend un premier type de configuration et un deuxième type de configuration ; le premier type de configuration est utilisé pour mettre en œuvre le premier type d'opération de contrôle prise en charge par la station de base principale et effectuée sur la station de base secondaire primaire ; et le deuxième type de configuration est utilisé pour mettre en œuvre le deuxième type d'opération de contrôle prise en charge par la station de base secondaire primaire et exécutée sur la station de base secondaire restante.

3. Procédé de gestion de liaison radio de la revendication 2, comprenant en outre le fait :
d'effectuer, par la station de base principale, une configuration sur la station de base secondaire restante via la signalisation d'interface Xn, dans lequel la configuration ne comprend que le premier type de configuration.

4. Procédé de gestion de liaison radio de la revendication 1, comprenant en outre le fait :
d'effectuer, par la station de base principale, une configuration liée à la station de base secondaire primaire sur l'UE via une signalisation de contrôle de ressources radio, RRC, par l'intermédiaire d'une interface Uu, dans lequel la configuration liée à la station de base secondaire primaire comprend un troisième type de configuration et un quatrième type de configuration ; le troisième type de configuration est utilisé pour mettre en œuvre une logique de liaison de plan de contrôle entre l'UE et la station de base secondaire primaire ; et le quatrième type de configuration est utilisé pour mettre en œuvre une logique de liaison de plan d'utilisateur entre l'UE et la station de base secondaire primaire.

5. Procédé de gestion de liaison radio de la revendication 1, comprenant en outre :
après que la station de base secondaire primaire a effectué avec succès le deuxième type d'opération de contrôle sur la station de base secondaire restante, le fait de synchroniser, par la station de base principale et la station de base secondaire primaire, un résultat d'opération de contrôle via une signalisation d'interface Xn pour synchroniser un état de configuration des ressources d'exploitation pour la station de base secondaire restante.

6. Procédé de gestion de liaison radio, comprenant le fait de :
recevoir, par une station de base secondaire cible, une configuration effectuée par une station de base principale devant être desservie en tant que station de base secondaire primaire ; dans lequel la station de base secondaire cible fait partie d'un ensemble de stations de base secondaires, l'ensemble de stations de base secondaires comprenant la station de base secondaire cible et une ou plusieurs stations de base secondaires restantes, dans lequel la station de base principale prend en charge un premier type d'opération de contrôle effectuée sur la station de base secondaire primaire et une station de base secondaire restante de l'ensemble de stations de base secondaires, à l'exception de la station de base secondaire primaire, et la station de base secondaire primaire prend en charge un deuxième type d'opération de contrôle effectuée sur la station de base secondaire restante (1101) ;
**caractérisé en ce que**,
le procédé comprend en outre :
en cas d'échec de connexion de liaison radio ou d'échec de transfert intercellulaire mobile entre la station de base principale et un équipement utilisateur, UE, le fait de permettre à la station de base secondaire primaire d'être activée par la station de base principale, dans lequel lorsque la station de base secondaire primaire est dans un état activé, la station de base secondaire primaire remplace la station de base principale, passe à une nouvelle station de base principale, et effectue les tâches supplémentaires suivantes : transporter une liaison de plan de contrôle entre un new station de base principale et un élément de réseau dans un réseau central, CN, et transporter une liaison de plan de contrôle entre la nouvelle station de base principale et l'UE ;
dans lequel le deuxième type d'opération de contrôle comprend au moins l'une des opérations de contrôle suivantes : une opération d'ajout de liaison radio, une opération de suppression de liaison radio, une opération de reconfiguration de liaison radio, une opération de mise à jour d'un groupe de cellules de desserte de l'UE, et une opération de reconfiguration de support radio de données, DRB ;
dans lequel le premier type d'opération de contrôle comprend le deuxième type d'opération de contrôle et les tâches supplémentaires ;
dans lequel une liaison de plan de contrôle indépendante et une liaison de plan d'utilisateur indépendante existent entre la station de base secondaire primaire et un élément de réseau dans le CN, lorsqu'une liaison de plan de contrôle entre la station de base principale et l'élément de réseau dans le CN est dans un état de fonctionnement normal, la liaison de plan de contrôle entre la station de base secondaire primaire et l'élément de réseau dans le CN dans un état configuré et non activé, et la liaison de plan d'utilisateur entre la station de base secondaire primaire et l'élément de réseau dans le CN est dans un état activé et fonctionne normalement, et lorsque la liaison de plan de contrôle entre la station de base principale et l'élément de réseau dans le CN est dans un état de fonctionnement anormal, la liaison de plan de contrôle et la liaison de plan d'utilisateur entre la station de base secondaire primaire et l'élément de réseau dans le CN sont dans l'état activé et fonctionnent normalement ; et
dans lequel une liaison de plan de contrôle indépendante et une liaison de plan d'utilisateur indépendante existent entre la station de base secondaire primaire et l'UE, la liaison de plan de contrôle entre la station de base secondaire primaire et l'UE et une liaison de plan de contrôle entre la station de base principale et l'UE sont simultanément dans un état activé et fonctionnent normalement pour transmettre simultanément et conjointement une signalisation de contrôle de ressources radio, RRC, respective de la station de base secondaire primaire et de la station de base principale, et la liaison de plan d'utilisateur entre la station de base secondaire primaire et l'UE et une liaison de plan d'utilisateur entre la station de base secondaire restante et l'UE sont simultanément dans l'état activé et fonctionnent normalement pour transmettre simultanément et conjointement des données de plan utilisateur respectives de la station de base secondaire primaire et de la station de base secondaire restante.

7. Procédé de gestion de liaison radio de la revendication 6, dans lequel le fait de recevoir, par une station de base secondaire cible, une configuration effectuée par une station de base principale comprend le fait :
de recevoir, par la station de base secondaire cible, la configuration effectuée par la station de base principale via une signalisation d'interface Xn, dans lequel la configuration comprend un premier type de configuration et un deuxième type de configuration ; le premier type de configuration est utilisé pour mettre en œuvre le premier type d'opération de contrôle prise en charge par la station de base principale et effectuée sur la station de base secondaire primaire ; et le deuxième type de configuration est utilisé pour mettre en œuvre le deuxième type d'opération de contrôle prise en charge par la station de base secondaire primaire et exécutée sur la station de base secondaire restante.

8. Appareil de gestion de liaison radio, appliqué à une station de base principale, comprenant :
une unité de sélection (1201), configurée pour sélectionner une station de base secondaire cible d'un ensemble de stations de base secondaires ; dans lequel l'ensemble de stations de base secondaires comprend la station de base secondaire cible et une ou plusieurs stations de base secondaires restantes ; et
une unité de configuration (1202), configurée pour effectuer une configuration sur la station de base secondaire cible, et prendre la station de base secondaire cible configurée comme station de base secondaire primaire ; dans lequel la station de base principale prend en charge un premier type d'opération de contrôle effectuée sur la station de base secondaire primaire et une station de base secondaire restante, et la station de base secondaire primaire prend en charge un deuxième type d'opération de contrôle effectuée sur la station de base secondaire restante ;
**caractérisé en ce que**,
l'appareil comprend en outre :
une unité d'activation (1204), configurée pour, en cas d'échec de connexion de liaison radio ou d'échec de transfert intercellulaire mobile entre la station de base principale et un équipement utilisateur, UE, permettre à la station de base principale d'activer la station de base secondaire primaire, dans lequel lorsque la station de base secondaire primaire est dans un état activé, la station de base secondaire primaire remplace la station de base principale, passe à une nouvelle station de base principale, et effectue les tâches supplémentaires suivantes :
transporter une liaison de plan de contrôle entre la nouvelle station de base principale et un élément de réseau dans un réseau central, CN, et transporter une liaison de plan de contrôle entre la nouvelle station de base principale et l'UE ;
dans lequel le deuxième type d'opération de contrôle comprend au moins l'une des opérations de contrôle suivantes : une opération d'ajout de liaison radio, une opération de suppression de liaison radio, une opération de reconfiguration de liaison radio, une opération de mise à jour d'un groupe de cellules de desserte de l'UE, et une opération de reconfiguration de support radio de données, DRB ;
dans lequel le premier type d'opération de contrôle comprend le deuxième type d'opération de contrôle et les tâches supplémentaires ;
dans lequel une liaison de plan de contrôle indépendante et une liaison de plan d'utilisateur indépendante existent entre la station de base secondaire primaire et un élément de réseau dans le CN, lorsqu'une liaison de plan de contrôle entre la station de base principale et l'élément de réseau dans le CN est dans un état de fonctionnement normal, la liaison de plan de contrôle entre la station de base secondaire primaire et l'élément de réseau dans le CN dans un état configuré et non activé, et la liaison de plan d'utilisateur entre la station de base secondaire primaire et l'élément de réseau dans le CN est dans un état activé et fonctionne normalement, et lorsque la liaison de plan de contrôle entre la station de base principale et l'élément de réseau dans le CN est dans un état de fonctionnement anormal, la liaison de plan de contrôle et la liaison de plan d'utilisateur entre la station de base secondaire primaire et l'élément de réseau dans le CN sont dans l'état activé et fonctionnent normalement ; et
dans lequel une liaison de plan de contrôle indépendante et une liaison de plan d'utilisateur indépendante existent entre la station de base secondaire primaire et l'UE, la liaison de plan de contrôle entre la station de base secondaire primaire et l'UE et une liaison de plan de contrôle entre la station de base principale et l'UE sont simultanément dans un état activé et fonctionnent normalement pour transmettre simultanément et conjointement une signalisation de contrôle de ressources radio, RRC, respective de la station de base secondaire primaire et de la station de base principale, et la liaison de plan d'utilisateur entre la station de base secondaire primaire et l'UE et une liaison de plan d'utilisateur entre la station de base secondaire restante et l'UE sont simultanément dans l'état activé et fonctionnent normalement pour transmettre simultanément et conjointement des données de plan utilisateur respectives de la station de base secondaire primaire et de la station de base secondaire restante.

9. Appareil de gestion de liaison radio, appliqué à une station de base secondaire primaire, comprenant :
une unité de communication (1301), configurée pour recevoir une configuration effectuée par une station de base principale devant être desservie en tant que station de base secondaire primaire ; dans lequel la station de base secondaire cible fait partie d'un ensemble de stations de base secondaires, l'ensemble de stations de base secondaires comprenant la station de base secondaire cible et une ou plusieurs stations de base secondaires restantes, dans lequel la station de base principale prend en charge un premier type d'opération de contrôle effectuée sur la station de base secondaire primaire et une station de base secondaire restante de l'ensemble de stations de base secondaires, à l'exception de la station de base secondaire primaire, et la station de base secondaire primaire prend en charge un deuxième type d'opération de contrôle effectuée sur la station de base secondaire restante ;
**caractérisé en ce que**,
en cas d'échec de connexion de liaison radio ou d'échec de transfert intercellulaire mobile entre la station de base principale et un équipement utilisateur, UE, la station de base secondaire primaire est autorisée à être activée par la station de base principale, dans lequel lorsque la station de base secondaire primaire est dans un état activé, la station de base secondaire primaire remplace la station de base principale, passe à une nouvelle station de base principale, et effectue les tâches supplémentaires suivantes : transporter une liaison de plan de contrôle entre la nouvelle station de base principale et un élément de réseau dans un réseau central, CN, et transporter une liaison de plan de contrôle entre la nouvelle station de base principale et l'UE ;
dans lequel le deuxième type d'opération de contrôle comprend au moins l'une des opérations de contrôle suivantes : une opération d'ajout de liaison radio, une opération de suppression de liaison radio, une opération de reconfiguration de liaison radio, une opération de mise à jour d'un groupe de cellules de desserte de l'UE, et une opération de reconfiguration de support radio de données, DRB ;
dans lequel le premier type d'opération de contrôle comprend le deuxième type d'opération de contrôle et les tâches supplémentaires ;
dans lequel une liaison de plan de contrôle indépendante et une liaison de plan d'utilisateur indépendante existent entre la station de base secondaire primaire et un élément de réseau dans le CN, lorsqu'une liaison de plan de contrôle entre la station de base principale et l'élément de réseau dans le CN est dans un état de fonctionnement normal, la liaison de plan de contrôle entre la station de base secondaire primaire et l'élément de réseau dans le CN dans un état configuré et non activé, et la liaison de plan d'utilisateur entre la station de base secondaire primaire et l'élément de réseau dans le CN est dans un état activé et fonctionne normalement, et lorsque la liaison de plan de contrôle entre la station de base principale et l'élément de réseau dans le CN est dans un état de fonctionnement anormal, la liaison de plan de contrôle et la liaison de plan d'utilisateur entre la station de base secondaire primaire et l'élément de réseau dans le CN sont dans l'état activé et fonctionnent normalement ; et
dans lequel une liaison de plan de contrôle indépendante et une liaison de plan d'utilisateur indépendante existent entre la station de base secondaire primaire et l'UE, la liaison de plan de contrôle entre la station de base secondaire primaire et l'UE et une liaison de plan de contrôle entre la station de base principale et l'UE sont simultanément dans un état activé et fonctionnent normalement pour transmettre simultanément et conjointement une signalisation de contrôle de ressources radio, RRC, respective de la station de base secondaire primaire et de la station de base principale, et la liaison de plan d'utilisateur entre la station de base secondaire primaire et l'UE et une liaison de plan d'utilisateur entre la station de base secondaire restante et l'UE sont simultanément dans l'état activé et fonctionnent normalement pour transmettre simultanément et conjointement des données de plan utilisateur respectives de la station de base secondaire primaire et de la station de base secondaire restante.

10. Système de gestion de liaison radio, comprenant : une station de base principale (1401) et un ensemble de stations de base secondaires (1402) ; dans lequel
la station de base principale (1401) est configurée pour exécuter le procédé de gestion de liaison radio de l'une quelconque des revendications 1 à 5, et une station de base secondaire cible sélectionnée par la station de base principale (1401) dans l'ensemble de stations de base secondaires (1402) est configurée pour exécuter le procédé de gestion de liaison radio de l'une quelconque des revendications 6 et 7.

11. Support de stockage, stockant des instructions exécutables par ordinateur qui sont configurées pour exécuter le procédé de gestion de liaison radio de l'une quelconque des revendications 1 à 5 ou le procédé de gestion de liaison radio de l'une quelconque des revendications 6 et 7.
